# EUROPEAN PATENT SPECIFICATION

(11) **EP 4 272 511 B1**
(45) Date of publication and mention of the grant of the patent: **03.12.2025**
(21) Application number: 22706940.8
(22) Date of filing: 12.01.2022
(51) Int. Cl.: H04W 76/15, H04W 36/12

(54) **MANAGING CONNECTIONS TO MULTIPLE CENTRALIZED UNITS**
VERWALTUNG VON VERBINDUNGEN ZU MEHREREN ZENTRALISIERTEN EINHEITEN
GESTION DE CONNEXIONS À DE MULTIPLES UNITÉS CENTRALISÉES

(30) Priority: 13.01.2021 US 202163199631 P
(43) Date of publication of application: 08.11.2023
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2022/012087
(87) International publication number: WO 2022/155178

(56) References cited:
- WO-A1-2020/154918
- US-A1- 2020 145 819
- ANONYMOUS: "3rd Generation Partnership Project; Technical Specification Group Radio Access Network; Study of separation of NR Control Plane (CP) and User Plane (UP) for split option 2; (Release 15)", 3GPP STANDARD; TECHNICAL REPORT; 3GPP TR 38.806, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.0.0, 18 January 2018 (2018-01-18), pages 1 - 22, XP051392782

## Description

### FIELD OF THE DISCLOSURE

This disclosure relates generally to wireless communications and, more particularly, to managing F1 connections to multiple centralized units (CUs) or Integrated access and backhaul (IAB) donors.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Generally speaking, integrated access and backhaul (IAB) enables wireless relaying in a radio access network (RAN). A relaying node, referred to as an IAB-node, supports access and backhauling via New Radio (NR). The terminating node of NR backhauling on the network side is referred to as the IAB-donor, which represents a base station with additional functionality to support IAB. Backhauling can occur via a single hop or via multiple hops, so that a user equipment (UE) communicates with the RAN via one IAB-node, or two or more IAB-nodes, and an IAB-donor. The IAB-donor provides network access to UEs via a system of backhaul and access links.

An IAB-donor can implement distributed architecture and include an IAB-donor-CU and one or more IAB-donor-DUs. In a 5G network architecture, the IAB-donor-CU is the gNB-CU of an IAB-donor, terminating the F1 interface with IAB-nodes and IAB-donor-DU. The IAB-donor-DU can be the gNB-DU of an IAB-donor. The IAB-donor-DU can host an IAB BAP sublayer (as defined in TS 38.340 Backhaul Adaptation Protocol (BAP), v. 16.2.0), providing wireless backhaul to IAB-nodes.

An IAB-node is a RAN node that can support NR access links to UEs and NR backhaul links to parent node(s) and child node(s). The parent node can be an IAB-node or an IAB-donor, and the child node is an IAB-node. The IAB-node supports gNB-DU functionality, as defined in TS 38.401 v. 15.5.0, to terminate the NR access interface to UEs and next-hop IAB-nodes, and to terminate the F1 protocol to the gNB-CU functionality, as defined in TS 38.401, at the IAB-donor. The gNB-DU functionality at the IAB-node is also referred to as IAB-DU. An IAB node routes IP traffic of an IAB-DU over the wireless backhaul via the BAP sublayer. In addition to the gNB-DU functionality, the IAB-node also supports a subset of the UE functionality referred to as IAB mobile terminal (IAB-MT). This functionality includes, for example, physical layer, layer-2, RRC, and non-access-stratum (NAS) functionality to connect to the gNB-DU of another IAB-node or the IAB-donor, to connect to the gNB-CU of the IAB-donor, and to the core network (CN). The IAB-MT can correspond to IAB-UE functionality.

All IAB-nodes that are connected to an IAB-donor via one or multiple hops form a directed acyclic graph (DAG) topology with the IAB-donor at the root. According to this DAG topology, the neighbor node on the interface of the IAB-DU is referred to as child node, and the neighbor node on the interface of the IAB-MT is referred to as parent node. The direction toward the child node is referred to as downstream, while the direction toward the parent node is referred to as upstream. The IAB-donor performs centralized resource, topology, and route management for the DAG topology.

For backhaul transport in IAB, the IAB-node routes IP traffic of the IAB-DU over the wireless backhaul, via the BAP sublayer. The BAP sublayer is specified in TS 38.340 v. 16.1.0. In the downstream direction, the BAP sublayer encapsulates upper-layer packets of the IAB-donor-DU and de-encapsulates the packets at the destination IAB-node. In the upstream direction, the BAP layer encapsulates upper-layer packets at the IAB-node and de-encapsulates the packets at the IAB-donor-DU. IAB-specific transport between IAB-donor-CU and IAB-donor-DU is specified in TS 38.401. The BAP sublayer routes packets based on the BAP routing ID in the BAP header. The communication stack adds the BAP header to the packet when the packet arrives from upper layers, and removes the BAP header when the packet has reached its destination node. The IAB-donor-CU selects and configures a BAP routing ID for a packet. The BAP routing ID has a BAP address and BAP path ID, where the BAP address indicates the destination node of the packet on the BAP sublayer, and the BAP path ID indicates the routing path the packet should follow to this destination. To support routing, each IAB-node and IAB-donor-DU has a respective designated BAP address.

There are several types of UE associations in an NG-RAN node. The NG-RAN node UE context stores all information needed for a UE and the associations between the UE and the logical NG and Xn connections used for NG/XnAP UE associated messages. The NG-RAN node UE context is a block of information in an NG-RAN node associated with one UE when the UE is in the CM_CONNECTED state. This block of information contains the information required to maintain the NG-RAN services for the active UE. An NG-RAN node establishes an NG-RAN node UE context when the UE completes the transition to the RRC CONNECTED state, after completion of handover resource allocation during handover preparation. In the latter case, at least UE state information, security information, UE capability information, and the identities of the UE-associated logical NG-connection are included in the NG-RAN node UE context. For dual connectivity, an S-NG-RAN establishes an NG-RAN node UE context after completion of an S-NG-RAN node Addition Preparation procedure. If a UE Context setup or modification procedure involves set up of radio bearers, the UE capabilities are provided to the receiving node as part of the UE context setup or modification procedures.

A bearer context is a block of information in a gNB-CU-UP node associated with one UE. The bearer context is used for communication over the E1 interface. The bearer context may include information about data radio bearers, PDU sessions and QoS-flows associated with the UE. The block of information contains the information required to maintain user-plane services for the UE.

Further, UE-associated logical NG/Xn/F1/E1-connection NGAP, XnAP, F1AP, and E1AP provide means to exchange control plane messages associated with the UE over the NG-C, Xn-C, and F1-Cinterfaces, respectively. A UE-associated logical connection is established during the first NGAP/XnAP/F 1AP message exchange between the NG/Xn/F 1 peer nodes. The network maintains the connection as long as nodes need to exchange UE-associated NG/XnAP/F1AP messages over the NG/Xn/F1 interface. The UE-associated logical NG-connection uses the identities AMF UE NGAP ID and RAN UE NGAP ID. The UE-associated logical Xn-connection uses the identities Old NG-RAN node UE XnAP ID and New NG-RAN node UE XnAP ID, or M-NG-RAN node UE XnAP ID and S-NG-RAN node UE XnAP ID. The UE-associated logical F1-connection uses the identities gNB-CU UE F1AP ID and gNB-DU UE F1AP ID. When a node (AMF or gNB) receives a UE associated NGAP/XnAP/F1AP message the node retrieves the associated UE based on the NGAP/XnAP/F1AP ID.

In topology adaptation scenarios, the IAB-node may need to migrate (*e.g.*, handover) from one parent node to another parent node to continue communicating with the RAN. When the IAB-node requires inter-donor migration (*i.e*., migration from one donor to another), it is not clear how IAB nodes and donors should support the signalling, manage context, and modify the topology. For instance, it is not clear how the IAB-node should establish respective connections (*e.g*., F1 connections) to multiple IAB-donors to perform inter-donor migration. WO2020/154918 discloses a method, device and computer readable medium for centralized unit switch. In the embodiments, the DU transmits identity information of a target CU/DU to the source CU for the CU switch. The target CU does not need to initiate context setup procedure to set up context for the terminal device. Thus, the switch is implemented with minimized signaling and interruption in the data connection and the switched is completed faster by avoiding the unnecessary F1 AP context setup. The 3rd Generation Partnership Project; Technical Specification Group Radio Access Network has published a "Study of separation of NR Control Plane (CP) and User Plane (UP) for split option 2". US2020/145819 discloses that a reconfiguration message is received at user equipment in a communication system from a disaggregated base station with which the user equipment has a current security context established. The reconfiguration message comprises an instruction to compute a new security context based on a security domain counter value, wherein the security domain counter value represents a given security domain from a plurality of security domains supported by the disaggregated base station.

### SUMMARY OF INVENTION

The invention is set out in the appended set of claims.

### BRIEF DESCRIPTION OF THE DRAWINGS

Fig. 1A is a block diagram of an example system in which a distributed unit (DU) operating in a radio access network (RAN) can implement the techniques of this disclosure for connecting to multiple centralized units (CUs) operating in the RAN;
Fig. 1B is a block diagram of an example base station with a CU and a DU that can operate in the system of Fig. 1A;
Figs. 2A and 2B are block diagrams of example protocol stacks according to which the UE or an IAB-MT of Fig. 1A communicates with base stations;
Fig. 3 is a block diagram of an example system supporting IAB in which a DU of an IAB-node establishes connections to multiple CUs;
Fig. 4A is a block diagram of an example protocol stack of an example system supporting IAB for the user plane;
Fig. 4B is a block diagram of an example protocol stack of an example system supporting IAB for the control plane;
Fig. 5A is a messaging diagram of an example scenario in which a DU of an IAB-node establishes a first F1 connection with a first CU of a first IAB-donor, and a second F1 connection with a second CU of a second IAB-donor via the first CU;
Fig. 5B is a messaging diagram of an example scenario similar to that of Fig. 5A, except the second F1 connection is established with the second CU via the first CU and a core network (CN);
Fig. 6A is a messaging diagram of an example scenario in which a DU of an IAB-node releases the respective first and second F1 connections with a first CU and a second CU established in a similar manner to that of Fig. 5A, and after performing an immediate handover to the second CU, establishes a third F1 connection with the second CU and a fourth F1 connection with the first CU via the second CU;
Fig. 6B is a messaging diagram of an example scenario similar to that of Fig. 6A, except the fourth F1 connection is established with the first CU via the second CU and a CN;
Fig. 6C is a messaging diagram of an example scenario similar to that of Fig. 6A, except instead of establishing the third and fourth F1 connections after performing an immediate handover to the second CU, the DU retains the first and second F1 connections and physically re-routes the first F1 connection to between the DU and the second CU, and the second F1 connection to between the DU and the first CU via the second CU.
Fig. 6D is a messaging diagram of an example scenario similar to that of Fig. 6C, except the re-routed second F1 connection is between the DU and the first CU via the second CU and a CN;
Fig. 7A is a messaging diagram of an example scenario similar to that of Fig. 6A, except the DU establishes the third and fourth F1 connections after performing a conditional handover to the second CU;
Fig. 7B is a messaging diagram of an example scenario similar to that of Fig. 7A, except the fourth F1 connection is established with the first CU via the second CU and a CN;
Fig. 7C is a messaging diagram of an example scenario similar to that of Fig. 6C, except the DU re-routes the first and second F1 connections after performing a conditional handover to the second CU;
Fig. 7D is a messaging diagram of an example scenario similar to that of Fig. 7C, except the re-routed second F1 connection is between the DU and the first CU via the second CU and a CN;
Fig. 8A is a messaging diagram of an example scenario similar to that of Fig. 6A, except the first CU determines to hand over a UE to the second CU prior to handing over the DU to the second CU;
Fig. 8B is a messaging diagram of an example scenario similar to that of Fig. 8A, except a CN is involved in the UE handover;
Fig. 9 is a flow diagram of an example method that includes transmitting interface messages including identifiers to a respective first CU and second CU, which can be implemented in a DU of Fig. 1A, Fig. 1B, or Fig. 3;
Fig. 10 is a flow diagram of an example method that includes transmitting interface messages over a control plane and user plane to a respective first CU and second CU, which can be implemented in a DU of Fig. 1A, Fig. 1B, or Fig. 3;
Fig. 11 is a flow diagram of an example method that includes transmitting interface messages including respective packets to a respective first CU and second CU, which can be implemented in a DU of Fig. 1A, Fig. 1B, or Fig. 3;
Fig. 12 is a flow diagram of an example method that includes transmitting an interface message to a second CU for establishing a connection between a DU and the second CU via a first CU, which can be implemented in a first CU of Fig. 1A, Fig. 1B, or Fig. 3;
Fig. 13 is a flow diagram of an example method that includes receiving interface messages including respective identifiers for establishing respective connections to a first CU and second CU, which can be implemented in a first CU of Fig. 1A, Fig. 1B, or Fig. 3;
Fig. 14 is a flow diagram of an example method that includes receiving interface messages over a respective control plane and user plane for establishing respective connections to a first CU and second CU, which can be implemented in a first CU of Fig. 1A, Fig. 1B, or Fig. 3;
Fig. 15 is a flow diagram of an example method that includes determining whether to process an interface message received from a DU, which can be implemented in a first CU of Fig. 1A, Fig. 1B, or Fig. 3;
Fig. 16 is a flow diagram of an example method that includes transmitting an interface message to a DU, either via a first CU or directly, which can be implemented in a second CU of Fig. 1A, Fig. 1B, or Fig. 3;
Fig. 17 is a flow diagram of an example method that includes transmitting a second interface message to a DU in response to receiving a first interface message from a first CU, which can be implemented in a second CU of Fig. 1A, Fig. 1B, or Fig. 3;
Fig. 18 is a flow diagram of an example method that includes transmitting interface messages for establishing respective connections to a first CU and second CU, which can be implemented in a DU of Fig. 1A, Fig. 1B, or Fig. 3;
Fig. 19 is a flow diagram of an example method that includes determining that an interface message is for a second CU for establishing a connection between a DU and the second CU via a first CU, which can be implemented in a first CU of Fig. 1A, Fig. 1B, or Fig. 3; and
Fig. 20 is a flow diagram of an example method that includes transmitting an interface message to a DU, via a first CU, for establishing a connection between the DU and a second CU via the first CU, which can be implemented in a second CU of Fig. 1A, Fig. 1B, or Fig. 3.

### DETAILED DESCRIPTION OF THE DRAWINGS

Generally, using the techniques of this disclosure, a distributed unit (DU) can establish respective connections with multiple centralized units (CUs). Particularly, the DU can establish a first connection with a first CU, and a second connection with a second CU, via the first CU. In some implementations, a DU of an IAB-node can establish a first connection with a first CU of a source IAB-donor, and a second connection with a second CU of a target IAB-donor via the first CU. After establishing the respective connections, the IAB-node can perform inter-donor migration from the source donor to the target donor.

One example embodiment of these techniques is a method implemented in a DU operating in a RAN for establishing a connection with a CU operating in the RAN. The method can be executed by processing hardware and includes transmitting, to a first CU, a first interface message to establish a first connection between the DU and the first CU; and transmitting, to a second CU via the first CU, a second interface message to establish a second connection between the DU and the second CU via the first CU, to maintain the first connection and the second connection concurrently. Another example embodiment of these techniques is a DU including processing hardware configured to execute the method above.

Another example embodiment of these techniques is a method in a CU operating in a RAN for establishing a connection with a DU operating in the RAN. The method can be executed by processing hardware and includes receiving, from the DU, a first interface message to establish a first connection between the DU and the CU; receiving, from the DU, a second interface message to establish a second connection between the DU and a second CU via the CU, to maintain the first connection and the second connection concurrently; determining that the second interface message is for the second CU; and transmitting, to the second CU, the second interface message to establish the second connection. Still another embodiment of these techniques is a CU including processing hardware configured to execute the method above.

Yet another example embodiment of these techniques is a method in a CU for establishing a connection with a DU, the CU and the DU operating in a RAN. The method can be executed by processing hardware and includes receiving, from the DU, an uplink interface message via a second CU; and transmitting a downlink interface message to the DU via the second CU to establish a connection between the DU and the CU via the second CU. Still another embodiment of these techniques is a CU including processing hardware configured to execute the method above.

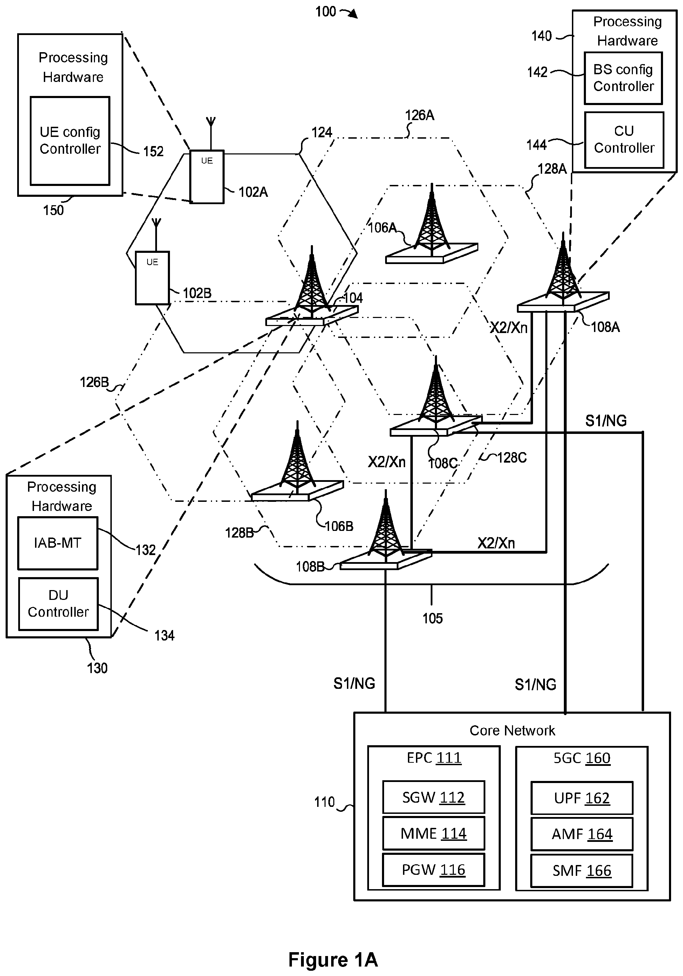

Fig. 1A depicts an example wireless communication system 100 in which communication devices can implement these techniques. The wireless communication system 100 includes UE 102A, UE 102B, a CN 110, and a RAN 105 comprising any one or more of an IAB-node 104, an IAB-node 106A, an IAB-node 106B, an IAB-donor 108A, an IAB-donor 108B, and an IAB-donor 108C. The UE 102A or UE 102B initially connects to the IAB-donor 108A via the IAB-node 104. In some implementations and scenarios, the IAB-node 104 can initially connect to the IAB-donor 108A directly, *e.g.,* over an F1 connection.

In other implementations and scenarios, the IAB-node 104 can connect to the IAB-donor 108A via one or more intermediate IAB-nodes (*e.g*., IAB-node 106A). In such implementations and scenarios, the IAB-node 104 can establish an F1 connection with the IAB-donor 108A via the one or more intermediate IAB-nodes. Thus, the UE 102A or UE 102B connects to the IAB-donor 108A via the IAB-node 104 and the one or more intermediate IAB-nodes. Throughout the disclosure, the description that UE 102 (*e.g.,* the UE 102A and/or 102B) connects to an IAB-donor 108 (*e.g.,* the IAB-donor 108A, the IAB-donor 108B, or the IAB-donor 108C) via the IAB-node 104 can mean that the UE 102 connects to the IAB-donor via the IAB-node 104, via the IAB-node 104 and the IAB-node 106 (*e.g.,* the IAB-node 106A, IAB-node 106B), or via the IAB-node 104, the IAB-node 106, and the other IAB-node(s). Similarly, the description that the IAB-node 104 connects to the IAB-donor 108 can mean that the IAB-node 104 connects to the IAB-donor 108 directly, via IAB-donor 106, or via the IAB-donor 106 and the other IAB-node(s).

As depicted in Fig. 1A, the IAB-node 104, IAB-node 106A, and IAB-node 106B operate cell 124, 126A, and 126B, respectively, and the IAB-donor 108A, IAB-donor 108B, and IAB-donor 108C operate cell 128A, 128B and 128C respectively. The cells 124, 126A, 126B, 128A, 128B, 128C can partially overlap so that the IAB-node 104 or UE 102 can hand over to the IAB-donor 108B or 108C, or perform an RRC connection reestablishment with the IAB-donor 108B or 108C.

In some scenarios, the IAB-donor 108A can configure the UE 102 (*e.g.,* UE 102A and/or UE 102B) to hand over from the IAB-donor 108A to the IAB-donor 108B due to load-balancing, service robustness, or other reasons, while retaining the connection between the UE 102 and the IAB-node 104. For example, the IAB-donor 108A can send a handover command message to the UE 102 via the IAB-node 104 to hand over the UE 102 to the IAB-donor 108B. In response to the handover command message, the UE hands over to the IAB-donor 108B while still maintaining connection with the IAB-node 104. The inter-donor handover can be an immediate handover or a conditional handover.

In other scenarios, the IAB-donor 108A can configure the IAB-node 104 to hand over from the IAB-donor 108A to the IAB-donor 108B due to load-balancing, service robustness, or based on measurement result(s) (*e.g.,* indicating cell 128B is better suited for the UE 102 than the cell 128A, signal strength/quality of the cell 128B is better than a first threshold, or signal strength/quality of the cell 128A is worse than a second threshold). For example, the IAB-donor 108A can send a handover command message to the IAB-node 104 directly, via the IAB-node 106, or via the IAB-node 106 and other downstream IAB-node(s) to hand over the IAB-node 104 to the IAB-donor 108B. In response to the handover command message, the IAB-node 104 hands over to the IAB-donor 108B. In some implementations, if the handover command message configures the IAB-node 104 to perform handover onto the cell 128B, the IAB-node 104 can perform a random access on the cell 128B with the IAB-donor 108B. In other implementations, if the handover command message configures the IAB-node 104 to perform handover onto the cell 126B, the IAB-node 104 can perform a random access on the cell 126B with the IAB-donor 106B connecting to the IAB-donor 108B. Before handing over to the IAB-donor 108B or performing the random access on the cell 128B or 126B, the IAB-node 104 in some implementations disconnects from the IAB-donor 108A or the cell 128A. In other implementations, the IAB-node 104 maintains connection with the IAB-donor 108A on the cell 128A while and/or after performing the handover with the IAB-donor 108B or the random access on the cell 128B or 126B.

In various configurations of the wireless communication system 100, the UE 102 can communicate with the IAB-node 104 via a first radio access technology (RAT) such as EUTRA or NR, and the IAB-node 104 can communicate with an IAB-donor (*e.g*., the IAB-donor 108A, 108B, or 108C) or an IAB-node 106A via a second RAT such as EUTRA or NR. The first and second RATs can be the same or different.

In the scenarios where the UE 102 and/or the IAB-node 104 hands over from the IAB-donor 108A to the IAB-donor 108B, the IAB-donors 108A and 108B operate as the source base station (S-BS) and target base station (T-BS), respectively. Similarly, in other scenarios, where the IAB-node 104 detects a failure on a connection with the IAB-donor 108A and performs an RRC connection reestablishment procedure with the IAB-donor 108B, the IAB-donors 108A and 108B operate as the S-BS and T-BS, respectively.

The IAB-donors 108A, 108B, 108C can connect to the same CN 110 which can be an evolved packet core (EPC) 111 or a fifth-generation core (5GC) 160. Each of the IAB-donor 108A, 108B or 108C can be implemented as an eNB supporting an S1 interface for communicating with the EPC 111, an ng-eNB supporting an NG interface for communicating with the 5GC 160, or as a gNB that supports the NR radio interface as well as an NG interface for communicating with the 5GC 160. To directly exchange messages during the scenarios discussed below, the IAB-donors 108A, 108B, 108C can support an X2 or Xn interface (*e.g.*, as shown in Fig. 1A between IAB-donors 108A and 108B, between IAB-donors 108A and 108C, and between IAB-donors 108B and 108C).

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE 102 to one or more external packet data networks, *e.g.*, an Internet network and/or an Internet Protocol (IP) Multimedia Subsystem (IMS) network. The 5GC 160 includes a User Plane Function (UPF) 162 and an Access and Mobility Management (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

In general, the wireless communication network 100 can include any suitable number of base stations supporting NR cells and/or EUTRA cells. More particularly, the EPC 111 or the 5GC 160 can be connected to any suitable number of base stations supporting NR cells and/or EUTRA cells. Although the examples below refer specifically to specific CN types (EPC, 5GC) and RAT types (5G NR and EUTRA), in general the techniques of this disclosure also can apply to other suitable radio access and/or core network technologies such as sixth generation (6G) radio access and/or 6G core network or 5G NR-6G DC.

With continued reference to Fig. 1A, the IAB-node 104 includes processing hardware 130, which may include one or more general-purpose processors (*e.g.*, central processing units (CPUs)) and a computer-readable memory storing machine-readable instructions executable on the general-purpose processor(s), and/or special-purpose processing units. The processing hardware 130 in the example implementation of Fig. 1A includes an IAB-mobile terminal (MT) 132 that terminates the Uu interface to a parent node (*e.g*., IAB-donor 108 or IAB-node 106) using the procedures and behaviors specified for the UE 102. The IAB-MT 132 is configured to manage or control a connection with the IAB-donor 108. In some implementations, the IAB-MT 132 can include a UE configuration controller, similar to a UE configuration controller 152 of the UE 102, to manage or control RRC configurations and/or RRC procedures, *e.g*., for communication with the IAB-donor 108 on the Uu interface. The processing hardware 130 also includes a DU controller 134 that is configured to manage or control the configuration techniques of this disclosure. For example, the DU controller 134 may be configured to provide and support lower layer configurations for an RRC message for UE 102 or an IAB-MT of a descendent IAB-node. In another example, the DU controller 134 is configured to control or manage IAB-node RRC reestablishment and reconfiguration procedures (*e.g*., including context management procedures or F1 Application Protocol (F1AP) procedures) with the IAB-donor 108. The IAB-nodes 106A, 106B can have processing hardware similar to the IAB-node 104.

The IAB-donor 108A includes processing hardware 140, which may include one or more general-purpose processors (*e.g.*, CPUs) and a computer-readable memory storing machine-readable instructions executable on the general-purpose processor(s), and/or special-purpose processing units. The processing hardware 140 in the example implementation of Fig. 1A includes a base station configuration controller 142 that is configured to manage or control RRC procedures and RRC configurations for the connected UE 102 and IAB-MT(s) of IAB node(s) (*e.g.,* the IAB-node 104, 106A, or 106B). For example, the base station configuration controller 142 may be configured to support RRC messaging associated with the handover procedure and/or RRC connection reestablishment procedure. The processing hardware 140 also includes an CU controller 144 that is configured to manage or control UE context management procedures or F1AP procedures with an IAB-node (*e.g.,* the IAB-node 104, 106A, or 106B). The IAB-donors 108B or 108C can have processing hardware similar to the IAB-donor 108A.

The UE 102 includes processing hardware 150, which may include one or more general-purpose processors (*e.g*., CPUs) and a computer-readable memory storing machine-readable instructions executable on the general-purpose processor(s), and/or special-purpose processing units. The processing hardware 150 in the example implementation of Fig. 1A includes a UE configuration controller 152 that is configured to manage or control RRC procedures and RRC configurations. For example, the configuration controller 152 may be configured to support RRC messaging associated with UE handover procedures and UE RRC reestablishment and reconfiguration procedures in accordance with any of the implementations discussed below.

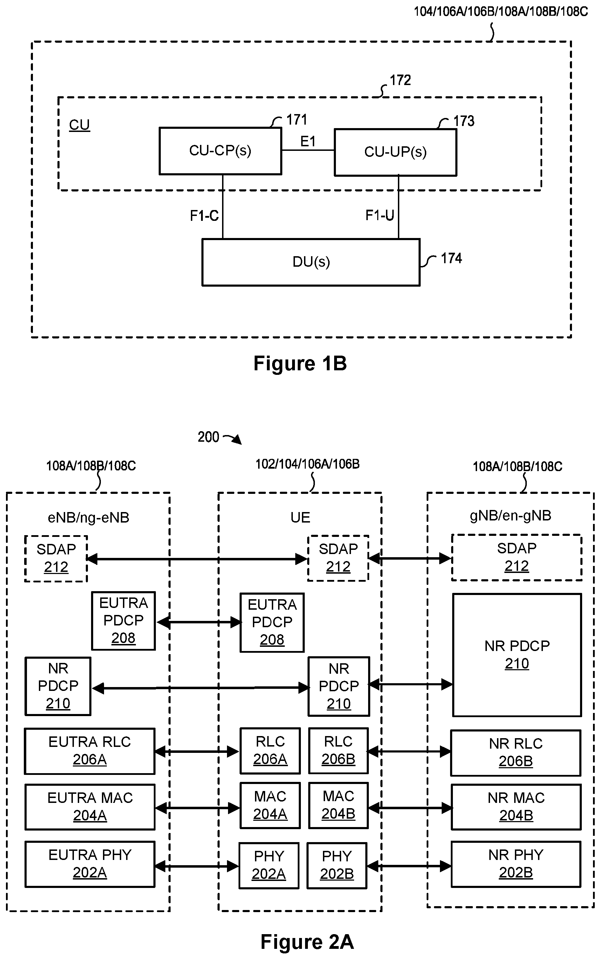

Fig. 1B depicts an example, distributed implementation of any one or more of the IAB-nodes 104, 106A, or 106B or IAB-donors 108A, 108B, or 108C. In this implementation, any one of the IAB-nodes 104, 106A, or 106B or IAB-donors 108A, 108B, or 108C includes a centralized unit (CU) 172 and one or more distributed units (DUs) 174. The CU 172 includes processing hardware, such as one or more general-purpose processors (*e.g.,* CPUs) and a computer-readable memory storing machine-readable instructions executable on the general-purpose processor(s), and/or special-purpose processing units. For example, the CU 172 can include the processing hardware 130 or 140 of Fig. 1A.

Each of the DUs 174 also includes processing hardware that can include one or more general-purpose processors (*e.g*., CPUs) and computer-readable memory storing machine-readable instructions executable on the one or more general-purpose processors, and/or special-purpose processing units. For example, the processing hardware can include a medium access control (MAC) controller configured to manage or control one or more MAC operations or procedures (*e.g.,* a random access procedure), and a radio link control (RLC) controller configured to manage or control one or more RLC operations or procedures when a base station (*e.g*., base station 106A) operates as a master node (MN) or a secondary node (SN). The process hardware can also include a physical layer controller configured to manage or control one or more physical layer operations or procedures.

In some implementations, the CU 172 can include a logical node CU-CP 171 that hosts the control plane (CP) part of the Packet Data Convergence Protocol (PDCP) protocol of the CU 172 and/or radio resource control (RRC) protocol of the CU 172. The CU 172 can also include logical node(s) CU-UP 173 that hosts the user plane (UP) part of the PDCP protocol and/or Service Data Adaptation Protocol (SDAP) protocol of the CU 172.

The CU-CP 171 can be connected to multiple CU-UP 173 through the E1 interface. The CU-CP 171 selects the appropriate CU-UP 173 for the requested services for the UE 102. In some implementations, a single CU-UP 173 can be connected to multiple CU-CP 171 through the E1 interface. The CU-CP 171 can be connected to one or more DU 174s through an F1-C interface. The CU-UP 173 can be connected to one or more DU 174 through the F1-U interface under the control of the same CU-CP 171. In some implementations, one DU 174 can be connected to multiple CU-UP 173 under the control of the same CU-CP 171. In such implementations, the connectivity between a CU-UP 173 and a DU 174 is established by the CU-CP 171 using Bearer Context Management functions.

Next, Fig. 2A illustrates in a simplified manner an example protocol stack 200 according to which the UE 102 can communicate with any of the IAB-donors 108A, 108B, or 108C. Each of the IAB-donors 108A, 108B, or 108C can be the eNB/ng-eNB or the gNB. Each of the IAB-nodes 104, 106A, or 106B can contain functionalities of the UE 102. As such, each of the IAB-nodes 104, 106A, or 106B can also use the radio protocol stack 200 to communicate with any of the IAB-donors 108A, 108B, or 108C.

In the example protocol stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to an EUTRA PDCP sublayer 208 and, in some cases, to a NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. The NR PDCP sublayer 210 in turn can provide data transfer services to an Ethernet protocol layer (not shown in Fig. 2A), an Internet Protocol (IP) layer (not shown in Fig. 2A), Service Data Adaptation Protocol (SDAP) 212 and/or a radio resource control (RRC) sublayer (not shown in Fig. 2A). The UE 102 in some implementations supports both the EUTRA and the NR stack as shown in Fig. 2A, to support handover between EUTRA and NR base stations and/or to support DC over EUTRA and NR interfaces. Further, as illustrated in Fig. 2A, the UE 102 can support layering of NR PDCP 210 over EUTRA RLC 206A and SDAP sublayer 212 over the NR PDCP sublayer 210.

The EUTRA PDCP sublayer 208 and the NR PDCP sublayer 210 receive packets (*e.g.,* from an Internet Protocol (IP) layer, layered directly or indirectly over the PDCP layer 208 or 210) that can be referred to as service data units (SDUs), and output packets (*e.g.,* to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages or NAS messages, for example. On a user plane, the EUTRA PDCP sublayer 208 and the NR PDCP sublayer 210 can provide DRBs to support data exchange. Data exchanged on the NR PDCP sublayer 210 can be SDAP PDUs, Internet Protocol (IP) packets or Ethernet packets.

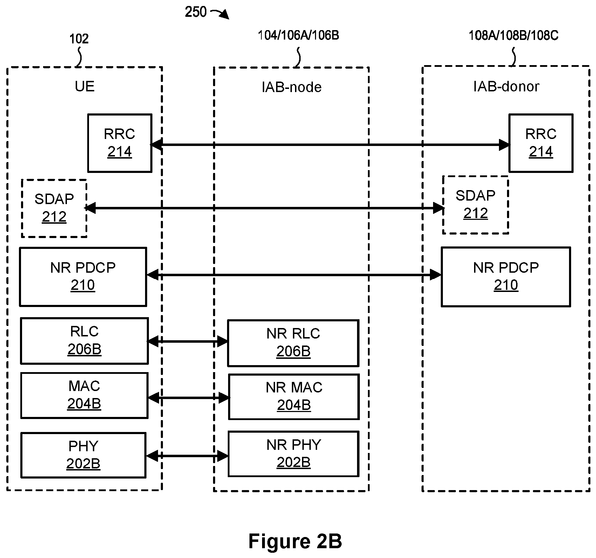

In one implementation, the IAB-node 104 generally hosts two NR functions - IAB-MT for maintaining the wireless backhaul connection towards any of the IAB-donors 108A, 108B, or 108C and any intermediate upstream IAB-node (*e.g*., IAB-node 106A), and IAB-DU 174 for providing access connection via a Uu interface to the UE 102 or downstream MTs of any IAB-nodes. The DU 174 at the IAB-node 104 can connect to a CU 172 hosted by any of the IAB-donors 108A, 108B, or 108C via an F1 interface. Thus, it is possible to functionally split the protocol stack, as shown by the protocol stack 250 in Fig. 2B. The CU 172 at any of the IAB-donors 108A, 108B, or 108C can hold all the control and upper layer functionalities (*e.g*., RRC 214, SDAP 212, NR PDCP 210), while the lower layer operations (*e.g.,* NR RLC 206B, NR MAC 204B, and NR PHY 202B) are delegated to the DU 174 located at any of the IAB-nodes 104, 106A, or 106B. To support connection to a 5GC, NR PDCP 210 provides SRBs to RRC 214, and NR PDCP 210 provides DRBs to SDAP 212 and SRBs to RRC 214.

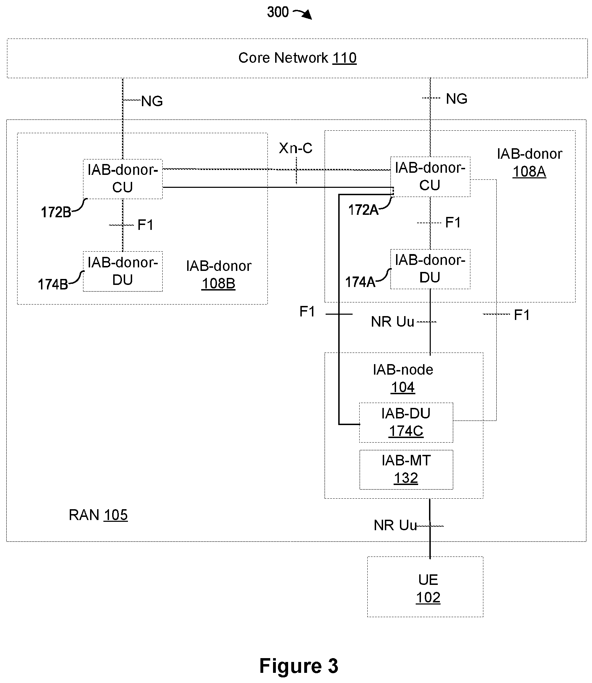

Next, Fig. 3 illustrates an example wireless communication system 300 including the CN 110, RAN 105, and UE 102. Generally, the RAN 105 includes a DU 174C having a connection established with a CU 172A and another (second) connection established with another (second) CU 172B. In some implementation, these connections may be F1 connections or F1 interfaces pursuant to an F1 Application Protocol (F1AP). In some implementations, DU 174C can be an IAB-DU of IAB-node 104, CU 172A can be an IAB-donor-CU of an IAB-donor 108A, and CU 172B can be an IAB-donor-CU of an IAB-donor 108B. The IAB-donor 108A includes an IAB-donor-CU 172A and one or more IAB-donor-DU(s) 174A. The IAB-donor 108B includes an IAB-donor-CU 172B and one or more IAB-donor-DU(s) 174B.

The UE 102 wirelessly connects to the IAB-node 104 via an NR Uu interface. The IAB-node 104 (*e.g.,* via the IAB-MT 132) also wirelessly connects to the IAB-donor 108A (*e.g.,* via the IAB-donor-DU 174A) via an NR Uu interface, similar to the manner in which the UE 102 connects to the IAB node 104 via an NR Uu interface. The IAB-DU 174C of the IAB-node 104 (*e.g.,* via the DU controller 134) exchanges F1-C and/or F1-U traffic with the IAB-donor 108A (*e.g.,* via the IAB-donor-DU 174A and/or IAB-donor-CU 172A) on connection(s) (*e.g.,* SRB(s) and/or DRB(s)) over NR Uu interface and/or an F1 interface. In some implementations, the IAB-DU 174C of the IAB-node 104 (*e.g.,* via the same DU controller 134 or another controller) exchanges F1-C and/or F1-U traffic with the IAB-donor 108B (*e.g.,* via the IAB-donor-CU 172B) via the IAB-donor 108A (*e.g.,* via the IAB-donor-CU 172A). Although not illustrated, in some implementations, the IAB-DU 174C of the IAB-node 104 can exchange F1-C and/or F1-U traffic with the IAB-donor 108B via the IAB-donor 108A and via the CN 110.

Although not illustrated, in some implementations, the IAB-donor-CU 172A and 172B can each be separated into IAB-donor-CU-CP and IAB-donor-CU-UP.

In some implementations, the IAB-node 104, as a downstream IAB-node 104, can exchange F1-C traffic and/or F1-U traffic with the IAB-donor 108A via one or more intermediate or upstream IAB-nodes that are not illustrated in Fig 3A (*e.g.,* IAB-node 106A). In some implementations, the IAB-node 104 can exchange F1-C traffic with the IAB-donor-CU 172A via the IAB-donor-DU 174A and zero, one or more intermediate IAB-node(s) (*e.g*., IAB-node 106A). The IAB-node 104 can exchange F1-U traffic with the IAB-donor-DU 174A via zero, one or more intermediate IAB-node(s) (*e.g*., IAB-node 106A). In some implementations, F1-C traffic and F1-U traffic between IAB-node 104 and IAB-donor-CU 172A is backhauled via the IAB-donor-DU 174A and the optional intermediate IAB-node(s). In some implementations, the IAB-node 104 can wirelessly connect to an upstream IAB-node (*e.g.,* IAB-node 106A), which in turn can connect to the IAB-donor 108A or another upstream IAB-node (not shown in Figs. 1A and 3). Generally speaking, an upstream IAB-node provides wireless backhaul to a downstream IAB-node via an NR Uu interface.

An IAB-node (*e.g*., IAB-node 104, IAB-node 106) generally connects to IAB-donor-DU 174A and provides an access connection to the UE 102. As discussed above, an IAB-node (*e.g*., IAB-node 104) can generally support network functionalities of the NR Uu interface (*e.g*., via IAB-MT 132) for maintaining the wireless backhaul connection towards IAB-donor-DU 174A and any intermediate upstream IAB-node (*e.g*., IAB-node 106A). The IAB-MT 132 of IAB-node 104 can include, *e.g*., physical layer, layer-2, RRC, and NAS functionality to connect to the IAB-DU of IAB-node 106, the IAB-donor-CU of the IAB-donor 108, and to the CN 110. The operation of the IAB-MT 132 can be pursuant to TS 23.501. The IAB-node 104 can also generally support a subset of the UE functionalities of the NR Uu interface (*e.g*., via IAB-DU 174C) for providing access connection to the UE 102 or IAB-MTs of any downstream IAB-nodes.

The IAB-donor-DU 174 (*i.e.,* IAB-donor-DU 174A and/or IAB-donor-DU 174B) can host the IAB BAP sublayer (*e.g*., as defined in TS 38.340 Backhaul Adaptation Protocol (BAP)), providing wireless backhaul to IAB-node(s) 104 and/or 106, *e.g.,* in accordance with TS 38.300. IP traffic from the IAB-DU 174C can be routed over the wireless backhaul via the BAP sublayer. In the downstream direction, upper layer packets are encapsulated by the BAP sublayer at the IAB-donor-DU 174 and de-encapsulated at the destination IAB-node 104. In the upstream direction, upper layer packets are encapsulated at the IAB-node 104 and de-encapsulated at the IAB-donor-DU 174. IAB-specific transport between IAB-donor-CU 172 and IAB-donor-DU 174 can occur in accordance with TS 38.401. On the BAP sublayer, packets are routed based on the BAP routing ID, which is carried in the BAP header. The BAP header is added to the packet when the packet arrives from upper layers, and the BAP header is stripped off when the packet has reached its destination node. The selection of the packet's BAP routing ID is configured by the IAB-donor-CU 172 (*i.e.,* IAB-donor-CU 172A and/or IAB-donor-CU 172B). The BAP routing ID has a BAP address and BAP path ID, where the BAP address indicates the destination node of the packet on the BAP sublayer, and the BAP path ID indicates the routing path the packet should follow to this destination. For the purpose of routing, each IAB-node 104 and/or 106 and IAB-donor-DU 174 is further configured with a designated BAP address.

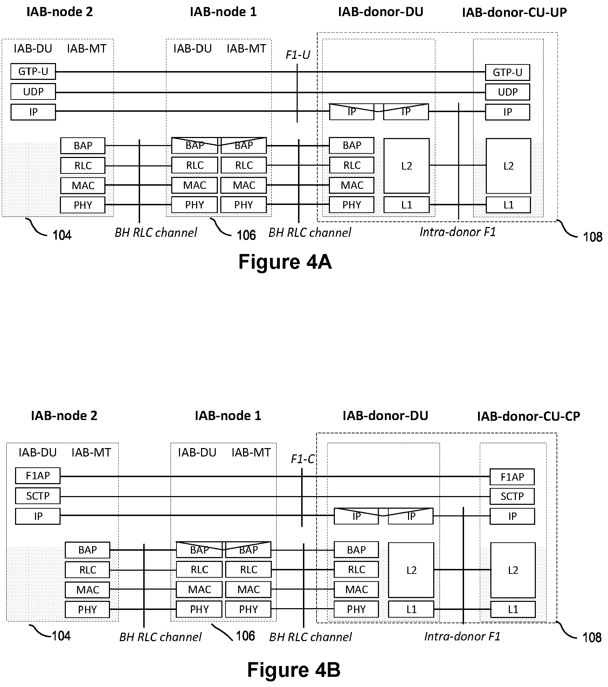

Figs. 4A and 4B illustrate examples of protocol stacks of RAN 105 supporting IAB for the user plane and control plane, respectively. As described above, in some implementations, the IAB-donor-CU 172 can be separated into IAB-donor-CU-CP and IAB-donor-CU-UP. Fig. 4A shows the protocol stack for F1-U between IAB-DU 174C and the IAB-donor-CU-UP, and Fig. 4B shows the protocol stack for F1-C between IAB-DU 174C and the IAB-donor-CU-CP. In these figures, F1-U and F1-C traffic are carried over two backhaul hops.

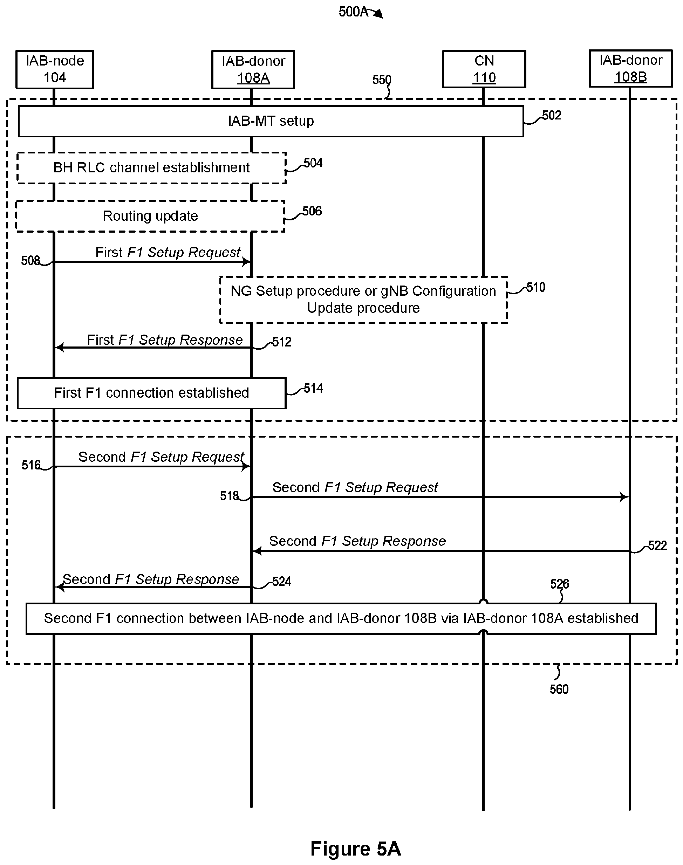

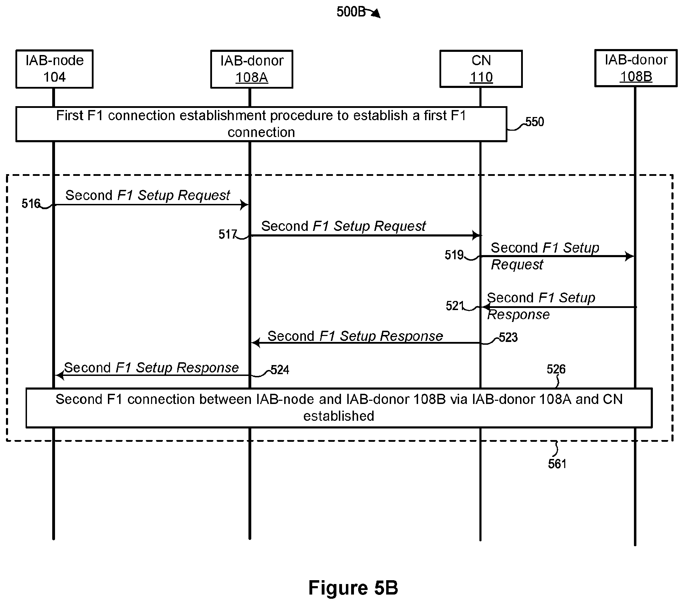

Next, Figs. 5-8 illustrate several example scenarios, in which a DU establishes a connection (*e.g.,* first F1 connection) with a first CU and another connection (*e.g.,* second F2 connection) with a second CU. In the following descriptions, "IAB-node 104" refers to the DU included in the IAB-node 104, "IAB-donor 108A" refers to the CU (*i.e.,* "first CU") included in the IAB-donor 108A, and "IAB-donor 108B" refers to the CU (*i.e.,* "second CU") included in the IAB-donor 108B, unless indicated otherwise. Although the examples below refer specifically to the DU, first CU, and second CU included in nodes that support IAB (*i.e.,* IAB-node 104, IAB-donor 108A, and IAB-donor 108B, respectively), in general the techniques of this disclosure can apply to other nodes of a RAN.

In the following description, "IAB-node 104" and "UE 102" can represent one or multiple IAB-nodes and UEs 102A, 102B, respectively. In case of multiple UEs, the procedures performed by the UE 102 can mean each of the multiple UEs (*e.g.,* UE 102A, UE 102B) performs the procedures, unless otherwise specified. The description for the UE 102 can apply to an IAB-MT of the IAB-node 104. Similarly, the procedures performed by the IAB-donor 108A and IAB-donor 108B can apply to each of the multiple UEs (*e.g.*, UE 102A, UE 102B).

In addition, although the examples below do not illustrate any intermediate IAB-node(s) between the IAB-node 104 and IAB-donor 108A, and between the IAB-node 104 and IAB-donor 108B, in general the techniques of this disclosure can apply to examples in which intermediate IAB-node(s) exist between the IAB-node 104 and IAB-donor 108A or IAB-donor 108B.

Referring first to Fig. 5A, in a scenario 500A, the IAB-node 104 initially performs an F1 connection establishment procedure 550 to establish an F1 connection with the IAB-donor 108A.

To initiate the F1 connection establishment procedure 550, the IAB-node 104 performs 502 an IAB-MT setup procedure with the IAB-donor 108A and CN 110. In the IAB-MT setup procedure 502, the IAB-node 104 (*e.g.,* IAB-MT 132) connects to the IAB-donor 108A and CN 110 in the same way as the UE 102 would. In some implementations, the IAB-node 104 connects to the IAB-donor 108A (*e.g.,* IAB-donor-CU 172A) by performing an RRC connection setup procedure, context management procedure(s), and/or other suitable RRC procedure(s) (*e.g*., security activation procedure, RRC reconfiguration procedure, and/or UE capability transfer procedure) with the IAB-donor 108A. The IAB-node 104 can select the IAB-donor 108A for access based on an over-the-air indication (*e.g*., transmitted in SIB) from the IAB-donor 108A (*e.g*., IAB-donor-DU). In some implementations, the IAB-node 104 connects to the CN 110 by performing NAS procedures (*e.g*., registration procedure, authentication procedure, identification procedure, security mode control procedure and/or PDU session establishment procedure) with the CN 110.

After performing the IAB-MT setup procedure 502, in some implementations, the IAB-node 104 can perform 504 a backhaul (BH) RLC channel establishment procedure with the IAB-donor 108A to establish backhaul RLC channels for carrying CP traffic (*e.g.,* carrying F1-C traffic/non-F1 traffic) to and from the IAB-node 104. In some implementations of the BH RLC channel establishment procedure, the IAB-donor 108A and/or the IAB-node 104 can establish a default BH RLC channel, and optionally, additional (non-default) BH RLC channel(s), to carry non-UP traffic (*e.g.,* CP traffic) to and from the IAB-node 104. In implementations in which intermediate IAB-node(s) (*e.g*., IAB-node 106A) exist between the IAB-node 104 and the IAB-donor 108A, the IAB-donor 108A and/or the IAB-node 104 can setup a new BH RLC channel or modify an existing BH RLC channel between the IAB-node 106A and IAB-donor 108A (*e.g*., IAB-donor-DU 174A). In some implementations of the BH RLC channel establishment procedure, the IAB-donor 108A (*e.g*., IAB-donor-CU 172A) can configure a BAP address of the IAB-node 104 and/or a default BAP Routing ID for the upstream direction.

After performing the IAB-MT setup procedure 502 and optionally the BH RLC channel establishment procedure 504, in some implementations, the IAB-node 104 can perform 506 a routing update procedure with the IAB-donor 108A to update the BAP layer to support routing between the IAB-node 104 and the IAB-donor 108A. In some implementations of the routing update procedure, the IAB-donor 108A and/or the IAB-node 104 can perform one or more procedures, such as F1AP procedure(s) (*e.g*., BAP mapping configuration procedure) and/or RRC procedure(s), with one another. In some implementations of the routing update procedure, the IAB-donor-CU 172A of the IAB-donor 108A initiates a F1AP procedure to configure the IAB-donor-DU 174A of the IAB-donor 108A with the mapping from IP header field(s) to a BAP Routing ID related to the IAB-node 104. In implementations in which intermediate IAB-node(s) (*e.g*., IAB-node 106A) exist between the IAB-node 104 and IAB-donor 108A, routing tables are updated on the intermediate IAB-node(s) and on the IAB-donor-DU 174A, with routing entries for the BAP Routing ID. In some implementations of the routing update procedure, the IAB-node 104 can perform RRC procedure(s) with the IAB-donor 108A (*e.g*., IAB-donor-CU 172A) to allocate one or more IP addresses at the IAB-node 104 by exchanging RRC messages (*e.g*., *IABOtherInformation* message, *RRCReconfiguration* message). The IAB-donor-CU 172A can obtain the IP address(es) from the IAB-donor-DU 174A in a F1AP message or by other means (*e.g*., OAM, DHCP).

In some implementations, the IAB-node 104 can perform (*e.g*., establish) a first transport network layer (TNL) association (TNLA) with the IAB-donor 108A after performing the IAB-MT setup procedure 502, the BH RLC channel establishment procedure 504, and/or the routing update procedure 506. Particularly, the IAB-node 104 and the IAB-donor 108A can establish the first TNLA by associating a first TNL address of the IAB-node 104 with a second TNL address of the IAB-donor 108A. In some implementations, the first and second TNL addresses can be IP addresses. Thus, the IAB-node 104 and IAB-donor 108A can communicate F1AP messages (*e.g.,* including *F1 Setup Request, F1 Setup Response,* F1AP messages described below) with one another by using TNL protocols (*e.g.,* F1-C TNL protocols) and the first TNLA (*i.e.,* the first and second TNL addresses). In some implementations, the TNL protocols include Stream Control Transmission Protocol (SCTP) and IP. For example, the IAB-node 104 can generate a packet including a F1AP message, the TNL protocol header(s), the first TNL address (*i.e.,* source address), and the second TNL address (*i.e.,* target address), and send the packet to the IAB-donor 108A. Similarly, the IAB-donor 108A can generate a packet including a F1AP message, the TNL protocol header(s), the second TNL address (*i.e.,* source address), and the first TNL address (*i.e.,* target address), and send the packet to the IAB-node 104.

After performing the IAB-MT setup procedure 502, BH RLC channel establishment procedure 504, routing update procedure 506, and/or the TNL association with the IAB-donor 108A, in some implementations, the IAB-node 104 can perform a (first) F1 Setup procedure with the IAB-donor 108A to establish a (first) F1 connection (*e.g*., F1-C connection or F1-C interface instance) with the IAB-donor 108A, so that the IAB-node 104 (*e.g.,* IAB-DU 174C) can exchange F1AP messages with the IAB-donor 108A (*e.g.,* IAB-donor-CU 172A) on the first F1 interface or connection.

To perform the first F1 Setup procedure, the IAB-node 104 transmits 508 a first *F1 Setup Request* message to the IAB-donor 108A to transfer information associated to the first F1 connection or interface instance. In some implementations, the IAB-node 104 transmits 508 the first *F1 Setup Request* message to the IAB-donor-DU 174A, which forwards the first *F1 Setup Request* message to the IAB-donor-CU 172A. In some implementations, the IAB-node 104 can include (first) identifiers or information associated with the IAB-node 104 (*e.g.,* IAB-DU 174C) in the first *F1 Setup Request* message, so that the IAB-donor-CU 172A can recognize the IAB-node 104 upon receiving the first *F1 Setup Request* message. For example, the first *F1 Setup Request* message can include a (first) identity of the IAB-node *104* (*e.g.,* IAB-DU 174C), a (first) transaction identifier (ID), (first) information indicating cell(s) served by the IAB-node 104, (first) information indicating an RRC version supported by the IAB-node 104, (first) Transport Layer Address (TLA) used by the IAB-node 104, and/or a (first) BAP address used by the IAB-node 104.

In response to receiving the first *F1 Setup Request* message, the IAB-donor 108A can initiate or create the first F1-C interface instance for exchanging F1AP messages with the IAB-node 104 and subsequently send 512 a first *F1 Setup Response* message to the IAB-node 104. In some implementations, the IAB-donor-CU 172A sends the first *F1 Setup Response* message to the IAB-donor-DU 174A, which in turn transmits 512 the first *F1 Setup Response* message to the IAB-node 104. In some implementations, the IAB-donor 108A can include, in the first *F1 Setup Response* message, the first transaction identifier associated with the first F1 connection. In some implementations, the IAB-donor 108A (*e.g*., IAB-donor-CU 172A) can include, in the first *F1 Setup Response* message, a (first) list of cell(s) to be activated by the IAB-node 104, so that when the IAB-node 104 receives the first *F1 Setup Response* message, the IAB-node 104 activates the cell(s) in the first list if the cell(s) are not otherwise active (the IAB-node 104 can deactivate any active cells that are not included in the first list).

In some implementations, after or in response to receiving the first *F1 Setup Request* message or transmitting the first *F1 Setup Response* message, the IAB-donor-CU 172A can perform 510 an NG Setup procedure and/or gNB Configuration procedure with the CN 110 to establish or modify an NG connection with the CN 110 in view of the established first F1 connection.

As a result of completing the first F1 Setup procedure with the IAB-donor 108A, the IAB-node 104 (*e.g.,* IAB-DU 174C) establishes 514 the first F1 connection (*i.e.,* F1-C interface) with the IAB-donor 108A (*e.g.,* the IAB-donor-CU 172A). Consequently, the IAB-node 104 can exchange F1AP messages with the IAB-donor 108A over the first F1 connection. In some implementations, the IAB-node 104 can transmit an F1AP message (*e.g., gNB-DU Configuration Update* message) including a list of the active cell(s) (*i.e., In-Service* cell(s)) and/or a list of inactive cell(s) (*i.e., Out-Of-Service* cell(s)) to the IAB-donor 108A. In other implementations, the IAB-donor 108A (*e.g*., IAB-donor-CU 172A) can send, to the IAB-node 104, an F1AP message (*e.g., gNB-CU Configuration Update* message) that includes the first list of cell(s) to be activated by the IAB-node 104, so that when the IAB-node 104 receives the F1AP message, the IAB-node 104 activates the cell(s) in the first list if the cell(s) are not otherwise active (the IAB-node 104 can deactivate any active cells that are not included in the first list). The IAB-node 104 can also send an F1AP response message (*e.g., gNB-CU Configuration Update Acknowledge* message) back to the IAB-donor 108A in response to receiving the F1AP message.

The events 502, 504, 506, 508, 510, 512, and 514 can be collectively referred as the F1 connection establishment procedure 550.

During or after performing the F1 connection establishment procedure 550, the IAB-node 104 performs another (second) F1 connection establishment procedure 560 to establish another (second) F1 connection with another IAB-donor (*e.g*., the IAB-donor 108B). The IAB-node 104 may be triggered to perform the second F1 connection establishment procedure 560 in various ways.

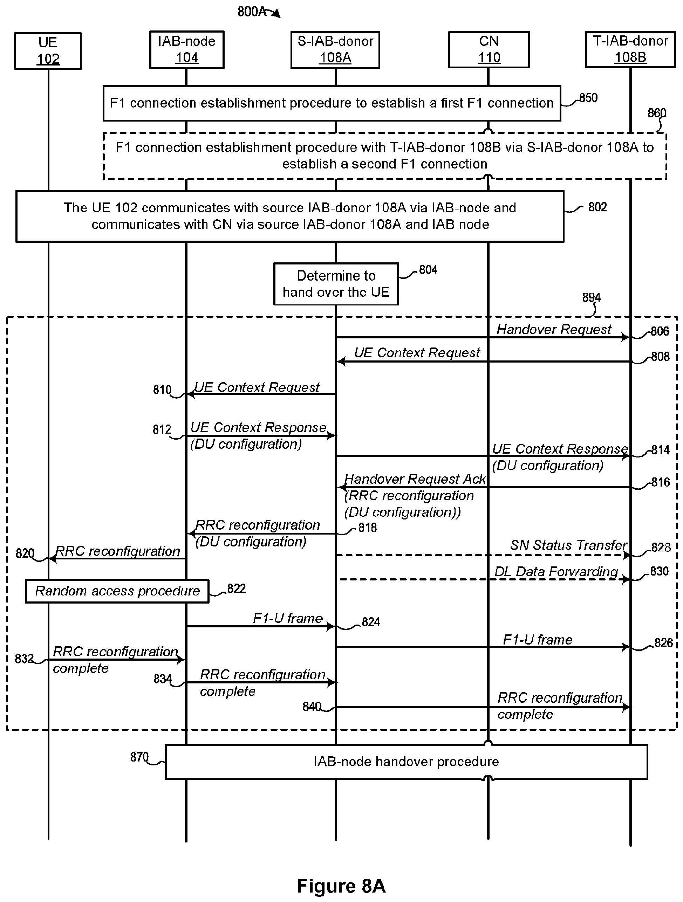

In some implementations, during or after the F1 connection establishment procedure 550 and before performing a handover preparation with the IAB-donor 108B for handing over UE 102 or a descendant IAB-node of the IAB-node 104 to the IAB-donor 108B (*e.g.,* as described in Figs. 8A-8B), the IAB-donor 108A can transmit an F1AP message (*e.g.,* over the F1 connection established at event 514) to the IAB-node 104 to request or to indicate to establish the second F1 connection with the IAB donor 108B, so that the IAB-node 104 can determine to establish the second F1 connection. The IAB-donor 108A can include an address (*e.g.,* IP address, Transport Network Layer address) or identity (*e.g.,* gNB identity, gNB-CU identity, a TEID, or gNB-CU name) of the IAB-donor 108B or the IAB-donor-CU 172B in the F1AP message.

In other implementations, before, during, or after the F1 connection establishment procedure 550, an operation and maintenance (O&M) node of the wireless communication system 100 (not illustrated in Fig. 1A) can transmit an O&M configuration message to the IAB-node 104 to indicate to establish the second F1 connection with the IAB donor 108B or the IAB-donor-CU 172B, so that the IAB-node 104 can determine to establish the second F1 connection. The O&M node can include an address (*e.g.,* IP address, TNL address) or identity (*e.g.,* gNB identity, gNB-CU identity, a TEID, or gNB-CU name) of the IAB-donor 108B or the IAB-donor-CU 172B in the O&M configuration message.

In yet other implementations, the IAB-node 104 can be pre-configured (*e.g*., via network operator or manufacturer programming) with an IAB-donor list including the address or identity of the IAB-donor 108B or the IAB-donor-CU 172B, and include logic that enables the IAB-node 104 to initiate the second F1 connection establishment procedure 560 after performing the F1 connection establishment procedure 550.

To initiate the second F1 connection establishment procedure 560, the IAB-node 104 performs another (second) F1 Setup procedure with the IAB-donor 108A to establish a (second) F1 connection (*e.g*., F1-C connection or interface) with the IAB-donor 108B via the IAB-donor 108A, so that the IAB-node 104 (*e.g.,* IAB-DU 174C) can exchange F1AP messages with the IAB-donor 108B (*e.g*., IAB-donor-CU 172B) on the second F1 interface or connection.

To perform the second F1 Setup procedure, the IAB-node 104 transmits 516 a second *F1 Setup Request* message to the IAB-donor 108A to transfer information associated to the second F1 connection or interface instance. In some implementations, the IAB-node 104 transmits 516 the second *F1 Setup Request* message to the IAB-donor-DU 174A, which forwards the second *F1 Setup Request* message to the IAB-donor-CU 172A. In some implementations, the IAB-node 104 can include (second) identifiers or information associated with the IAB-node 104 (*e.g.,* IAB-DU 174C) in the second *F1 Setup Request* message, so that the IAB-donor-CU 172A can recognize the IAB-node 104 upon receiving the second *F1 Setup Request* message. For example, the second *F1 Setup Request* message can include a (second) identity of the IAB-node 104 (*e.g.,* IAB-DU 174C), a (second) transaction identifier associated with the second F1 connection, (second) information indicating cell(s) served by the IAB-node 104, (second) information indicating an RRC version supported by the IAB-node 104, (second) TLA used by the IAB-node 104, and/or a (second) BAP address used by the IAB-node 104. In other implementations, the IAB-node 104 can include the first identifiers or information described above in the second *F1 Setup Request* message. The first identifiers or information described above may be the same as or different than the second identifiers or information. If the IAB-node performs one of the first and second F1 Setup procedures in an overlapping manner, the IAB-node 104 sets the first and second identifiers to different values to uniquely identify the first and second F1 Setup procedures, respectively. Thus, when the IAB-node 104 receives a *F1 Setup Response* message from the IAB-donor 108A, the IAB-node 104 can determine the *F1 Setup Response* message is the first *F1 Setup Response* message or the second *F1 Setup Response* message in accordance with a transaction identifier in the *F1 Setup Response* message. For example, if the transaction identifier is the first transaction identifier, the IAB-node 104 determines the received *F1 Setup Response* message is the first *F1 Setup Response* message. If the transaction identifier is the second transaction identifier, the IAB-node 104 determines the received F1 *Setup Response* message is the second *F1 Setup Response* message.

In response to or after receiving the second *F1 Setup Request* message, the IAB-donor 108A determines that the second *F1 Setup Request* message is for the IAB-donor 108B, and thus sends 518 the second *F1 Setup Request* message to the IAB-donor 108B (*e.g.,* IAB-donor-CU 172B). The IAB-donor 108A can determine that the second *F1 Setup Request* message is for the IAB-donor 108B, in various ways. In some implementations, the IAB-node 104 can indicate or include the address/identity (*e.g.*, IP address, Transport Network Layer address, gNB identity, gNB-CU identity, a TEID, or gNB-CU name) of the IAB-donor 108B or the IAB-donor-CU 172B in the second *F1 Setup Request* message, so that upon receiving the second *F1 Setup Request* message, the IAB-donor 108A can determine that the recipient for the second *F1 Setup Request* message is the IAB-donor 108B in accordance with the address/identity. In other implementations, the second *F1 Setup Request* message does not have the address/identity of the IAB-donor 108B. Instead, the IAB-donor 108A or IAB-donor-CU 172A can generate a container message including the second *F1 Setup Request* message to indicate that the recipient for the second *F1 Setup Request* message is not the IAB-donor 108A, and if the IAB-donor 108B is the only neighboring IAB-donor that the IAB-donor 108A connects to or can connect to, the IAB-donor 108A can determine that the IAB-donor 108B should be the proper recipient for the second *F1 Setup Request* message, and designate the container message accordingly. In implementations in which the IAB-donor 108A requests or indicates for the IAB-node 104 to establish the second F1 connection with the IAB donor 108B as described above, the IAB-donor 108A can determine that the recipient of the second *F1 Setup Request* message is the IAB-donor 108B in accordance with the container message.

In some implementations, the IAB-node 104 can perform (*e.g*., establish) a second TNLA with the IAB-donor 108B. Particularly, the IAB-node 104 and the IAB-donor 108B can establish the second TNLA by associating a third TNL address of the IAB-node 104 with a fourth TNL address of the IAB-donor 108B. In some implementations, the third and fourth TNL addresses can be IP addresses. Thus, the IAB-node 104 and IAB-donor 108B can communicate F1AP messages (*e.g.,* including the second *F1 Setup Request,* second *F1 Setup Response,* F1AP messages such as UE Context Request message 808, 810 and UE Context Response message 812, 814, *UL RRC Message Transfer* message described below) with one another by using TNL protocols (*e.g.,* the F1-C TNL protocols) and the second TNLA (*i.e.,* the third and fourth TNL addresses). In some implementations, the first and third TNL addresses can be the same or different. For example, the IAB-node 104 can generate a (first) packet including a F1AP message (*e.g.,* the second *F1 Setup Request* message or UE Context Response message 812), the TNL protocol header(s), the third TNL address (*i.e.,* source address), and the fourth TNL address (*i.e.,* target address), and send the packet to the IAB-donor 108B via the IAB-donor 108A. Similarly, the IAB-donor 108B can generate a (second) packet including a F1AP message (*e.g.,* the second *F1 Setup Response* message or UE Context Request message 808), the TNL protocol header(s), the fourth TNL address (*i.e.,* source address), and the third TNL address (*i.e.,* target address), and send the packet to the IAB-node 104 via the IAB-donor 108A. In some implementations, the IAB-donor 108A may store the fourth TNL address. The IAB-donor 108A can obtain the fourth TNL address from the O&M node or be preconfigured with the fourth TNL address. Thus, when the IAB-donor 108A receives the second packet, the IAB-donor 108A can determine that the recipient is the IAB-donor 108B in accordance with the fourth TNL address. In other implementations, the IAB-donor 108A may store routing information to route the second packet. The IAB-donor 108A can obtain the routing information from the O&M node or be preconfigured with the routing information. Thus, when the IAB-donor 108A receives the second packet, the IAB-donor 108A can route the second packet to the IAB-donor 108B directly or indirectly (*e.g*., via a router, gateway, or CN 110) in accordance with the routing information.

As shown in Fig. 5A, the IAB-donor 108A can send 518 the second *F1 Setup Request* message directly to the IAB-donor 108B, over a BS to BS interface (*e.g.,* Xn interface). The BS to BS interface may have been established before or during the F1 connection establishment procedure 550. In some implementations, the IAB-donor-CU 172A can perform a BS to BS interface setup procedure (*e.g*., Xn Setup procedure) with the IAB-donor-CU 172B before or after the IAB-MT setup procedure 502, before the IAB-node 104 transmits 508 the *F1 Setup Request* message, before or after performing the NG Setup procedure or gNB Configuration Update procedure 510, or before the IAB-node 104 receives the *F1 Setup Response* message.

To send 518 the second *F1 Setup Request* message, *e.g.,* directly to the IAB-donor 108B over the BS to BS interface, the IAB-donor 108A can generate a first BS to BS interface message (*e.g*., Xn interface message, XnAP message, or GTP-U packet) including the second *F1 Setup Request* message (or the first packet), and send 518 the first BS to BS interface message to the IAB-donor 108B. In another implementation, the IAB-donor 108A can generate a first container message, such as a first RRC message or a first General Packet Radio System (GPRS) Tunneling Protocol User Plane (GTP) packet, that includes the second *F1 Setup Request* message (or the first packet), and send 518 the first container message to the IAB-donor 108B. The first container message can include one or more first identifiers of the IAB-donor 108B and/or IAB-donor 108A, such as first Tunnel Endpoint Identifiers (TEIDs) (*e.g.,* TEID of the IAB-donor 108B and/or a TEID of the IAB-donor 108A). The first container message can include a fifth TNL address of the IAB-donor 108A (*i.e.,* source address) and a sixth TNL address of the IAB-donor 108B (*i.e.,* target address). The fifth TNL address can be the same as or different from the second TNL address. The sixth TNL address of the IAB-donor 108B can be the same as or different from the fourth TNL address.

In response to receiving 518 the second *F1 Setup Request* message, the IAB-donor 108B can initiate or create the second F1-C interface instance for exchanging F1AP messages with the IAB-node 104 and subsequently send 522 a second *F1 Setup Response* message directly to the IAB-donor 108A over the BS to BS interface, which in turn transmits 524 the second *F1 Setup Response* message to the IAB-node 104. In some implementations, the IAB-donor-CU 172B sends 522 the second *F1 Setup Response* message over the BS to BS interface to the IAB-donor-CU 172A, which in turn sends the second *F1 Setup Response* message to the IAB-node 104 via the IAB-donor-DU 174A. In some implementations, to send 522 the second *F1 Setup Response* message, the IAB-donor 108B can generate a second BS to BS interface message (*e.g*., Xn interface message, XnAP message, or GTP-U packet) including the second *F1 Setup Response* message (or the second packet), and send 522 the second BS to BS interface message to the IAB-donor 108A. In other implementations, the IAB-donor 108B can generate a second container message, such as a second RRC message or a second GTP packet, that includes the second *F1 Setup Response* message (or the second packet), and send the second container message to the IAB-donor 108A. The second container message can include one or more second identifiers of the IAB-donor 108B and/or IAB-donor 108A, such as second TEIDs (*e.g.,* TEID of the IAB-donor 108A and/or a TEID of the IAB-donor 108B) that may be the same or different than the first TEIDs described above. The second container message can include the fifth TNL address (*i.e.,* source address) and the sixth TNL (*i.e.,* target address).

In some implementations, the IAB-donor 108B can include, in the second *F1 Setup Response* message, the second transaction identifier. In some implementations, the IAB-donor 108B (*e.g.,* IAB-donor-CU 172B) can include, in the second *F1 Setup Response* message, a (second) list of cell(s) to be activated by the IAB-node 104, so that when the IAB-node 104 receives the second *F1 Setup Response* message, the IAB-node 104 refrains from activating the cell(s) in the second list but not included in the first list (the IAB-node 104 can refrain from deactivating any active cells that are not included in the second list but included in the first list).

In some implementations, in response to receiving the second *F1 Setup Request* message from the IAB-donor 108B or transmitting the second *F1 Setup Response* message to the IAB-node, the IAB-donor-CU 172A may not perform, or refrain from performing, an NG Setup procedure and/or gNB Configuration procedure with the CN 110 in view of the established second F1 connection.

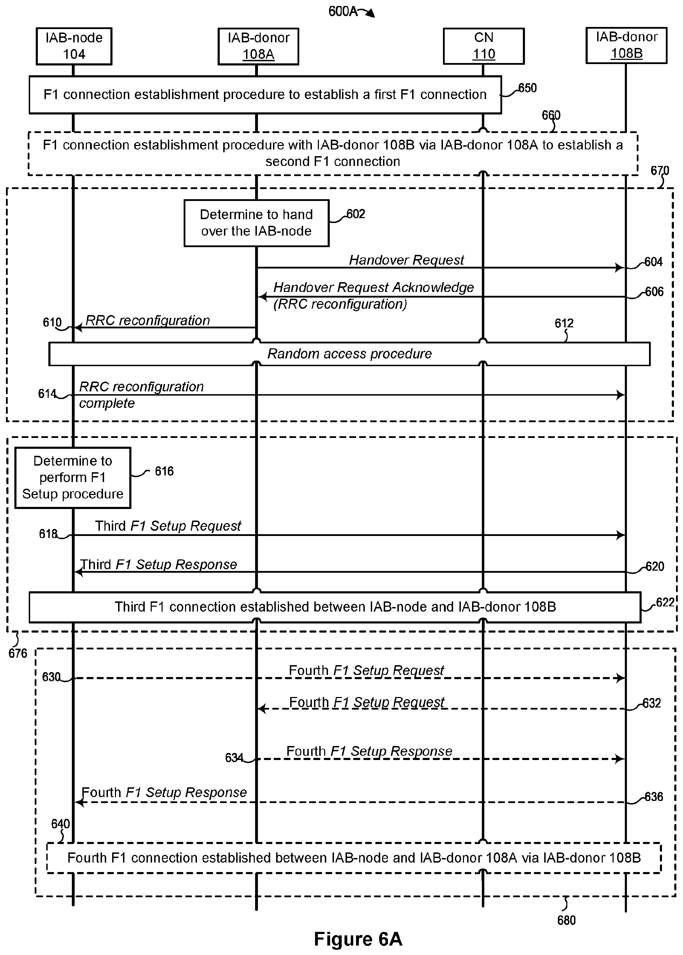

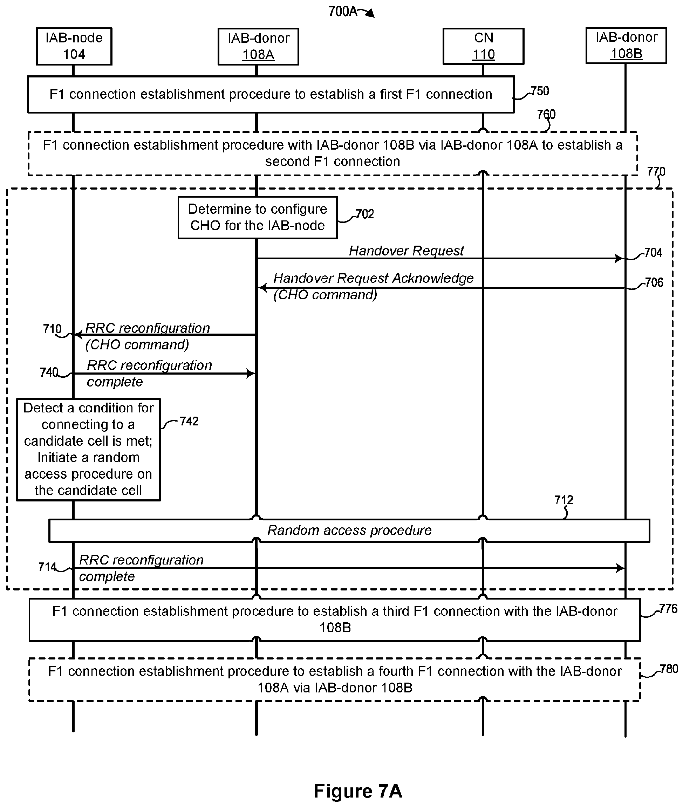

As a result of completing the second F1 Setup procedure with the IAB-donor 108B, the IAB-node 104 (*e.g.,* IAB-DU 174C) establishes 526 the second F1 connection with the IAB-donor 108B via the IAB-donor 108A. Consequently, the IAB-node 104 can exchange F1AP messages with the IAB-donor 108B via the IAB-donor 108A over the second F1 connection. In some implementations, after the IAB-node 104 hands over to the IAB-donor 108B (*e.g.,* as described in Figs. 6A-6D and 7A-7D), the IAB-node 104 can activate cell(s) in the second list that are not active and subsequently transmit, to the IAB-donor 108B, an F1AP message (*e.g., gNB-DU Configuration Update* message) including a list of the active cell(s) (*i.e., In-Service* cell(s)) and/or a list of the inactive cell(s) (*i.e., Out-Of-Service* cell(s)).

The events 516, 518, 522, 524, and 526 can be collectively referred as the F1 connection establishment procedure 560.

In some implementations, the IAB-donor-CU 172B refrains from performing a BS to BS interface setup procedure (*e.g.,* Xn Setup procedure) with a base station (*e.g.,* IAB-donor 108A, IAB-donor 108C, IAB-donor-CU 172A, IAB-donor-CU 172B, a gNB not shown in Fig. 1A) in response to or after the F1 connection establishment procedure 560.

In some implementations, the IAB-donor 108A, IAB-node 104, RAN 105, or O&M node ensures that the IAB-node 104 performs F1 connection establishment procedure 560 before the IAB-donor 108A performs a handover preparation with the IAB-donor 108B for handing over the UE 102 or a descendant IAB-node of the IAB-node 104 to the IAB-donor 108B (*e.g.,* as described in Figs. 8A-8B).

In some implementations, the IAB-node 104 includes DU controller 134A (shown in Fig. 1A) to perform the first F1 Setup procedure with the IAB-donor 108A, and another DU controller (not shown in Fig. 1A) to perform the second F1 Setup procedure with the IAB donor 108B. In other implementations, the same DU controller (*e.g.,* DU controller 134A) performs both the first F1 Setup procedure and the second F1 Setup procedure.

Now referring to Fig. 5B, whereas the IAB-donor 108A of Fig. 5A can send 518 the second *F1 Setup Request* message directly to the IAB-donor 108B, over an established BS to BS interface, the IAB-donor 108A of Fig. 5B does not have a BS to BS interface established with the IAB-donor 108B, and thus can send the second *F1 Setup Request* message to the IAB-donor 108B via the CN 110. Accordingly, the IAB-node 104 can establish the second F1 connection with the IAB-donor 108B via the IAB-donor 108A and the CN 110. Otherwise, any of the implementations described above in reference to Fig. 5A can be applied to scenario 500B of Fig. 5B.

Similar to scenario 500A, in scenario 500B of Fig. 5B, the IAB-node 104 initially performs an F1 connection establishment procedure 550 to establish an F1 connection with the IAB-donor 108A.

During or after performing the F1 connection establishment procedure 550, the IAB-node 104 performs a second F1 connection establishment procedure 561 to establish a second F1 connection with the IAB-donor 108B. The second F1 connection establishment procedure 561 is similar to the second F1 connection establishment procedure 560, except the CN 110 coordinates exchange of the second *F1 Setup Request* message and second *F1 Setup Response* message between the IAB-donor 108A and IAB-donor 108B, because the IAB-donor 108A does not have a direct BS to BS interface established with the IAB-donor 108B. Particularly, in response to receiving 516 the second *F1 Setup Request* message from the IAB-node 104, the IAB-donor 108A sends 517 the second *F1 Setup Request* message to the CN 110, which in turn forwards 519 the second *F1 Setup Request* message to the IAB-donor 108B. In response to receiving 519 the second *F1 Setup Request* message, the IAB-donor 108B transmits 521 the second *F1 Setup Response* message to the CN 110, which in turn forwards 523 the second *F1 Setup Response* message to the IAB-donor 108A. The IAB-donor 108A then sends 524 the second *F1 Setup Response* message to the IAB-node 104. As a result, the IAB-node 104 (*e.g.,* IAB-DU 174C) establishes 526 the second F1 connection with the IAB-donor 108B via the IAB-donor 108A and the CN 110. The events 516, 517, 519, 521, 523, 524, and 526 can be collectively referred as the F1 connection establishment procedure 561.

In some implementations, the second *F1 Setup Request* message at events 516, 517, 519 and the second *F1 setup Response* message at events 521, 523, 524 can be replaced by the first packet and the second packet described in Fig. 5A, respectively.

Now referring to Fig. 6A, after the IAB-node 104 (*e.g.,* IAB-DU 174C) establishes the first F1 connection with the IAB-donor 108A and the second F1 connection with the IAB-donor 108B via the IAB-donor 108A as described in Fig. 5A, the IAB-node 104 can hand over to the IAB-donor 108B, releasing the first F1 connection and the second F1 connection in the process. Fig. 6A generally describes a scenario in which the IAB-node 104 establishes a third F1 connection with the IAB-donor 108B and a fourth F1 connection with the IAB-donor 108A via the IAB-donor 108B after the IAB-node 104 hands over to the IAB-donor 108B.

Similar to scenario 500A, in scenario 600A of Fig. 6A, the IAB-node 104 performs an F1 connection establishment procedure 650 to establish an F1 connection with the IAB-donor 108A, similar to the F1 connection establishment procedure 550. During or after performing the F1 connection establishment procedure 650, the IAB-node 104 performs a second F1 connection establishment procedure 660 to establish a second F1 connection with the IAB-donor 108B via the IAB-donor 108A, similar to the F1 connection establishment procedure 560.

The IAB-donor 108A at some point determines 602 that it should perform (immediate) handover of the IAB-node 104 to the IAB-donor 108B. The IAB-donor 108A can make this determination based on one or more measurement results received from the IAB-node 104, for example, or another suitable event (*e.g*., topology change commanded by a network node such as an O&M node). In response to this determination, the IAB-donor 108A sends 604 a *Handover Request* message to the IAB-donor 108B.

In some implementations, in the *Handover Request* message, the IAB-donor 108A includes a source Access Stratum (AS) configuration for the IAB-node 104. The IAB-node 104 uses the source AS configuration to communicate with the IAB-donor 108A. The *Handover Request* message can also include user plane setting such as TNL information including Transport Layer Address and GTP-TEID for other intermediate IAB-node(s) (*e.g*., IAB-node 106A). In other implementations, the *Handover Request* message can further include a UE context for the IAB-node 104 and/or the IAB related information such as the backhaul and topology related information (*e.g*., BAP mapping configuration or aggregation of BAP mapping configuration for the other intermediate IAB-nodes) and/or a UE context for the other intermediate IAB-node(s).

In response to receiving 604 the *Handover Request* message, the IAB-donor 108B generates an RRC reconfiguration message for the IAB-node 104 (*e.g.,* IAB-MT 132) and includes the RRC reconfiguration message in a *Handover Request Acknowledge* message. Subsequently, the IAB-donor 108B sends 606 the *Handover Request Acknowledge* message to the IAB-donor 108A. In turn, the IAB-donor 108A transmits 610 the RRC reconfiguration message to the IAB-node 104, which in turn attempts to perform handover in accordance with the RRC reconfiguration message.

In some implementations, the IAB-node 104 can perform 612 a random access procedure, if instructed in the RRC reconfiguration message, with the IAB-donor 108B. In response to the RRC reconfiguration message, the IAB-node 104 sends 614 an RRC reconfiguration complete message to the IAB-donor 108B during or after the random procedure (if performed). In some implementations, the IAB-donor 108B can send a *Handover Success* message to the IAB-donor 108A to indicate that the IAB-node 104 successfully hands over to the IAB-donor 108B, after receiving 614 the RRC reconfiguration complete message.

The events 602, 604, 606, 610, 612, and 614 can be collectively referred as the IAB-node handover procedure 670.

While performing or after completing the IAB-node handover procedure 670, in some implementations, the IAB-node 104 releases the first and second F1 connections physically established at events 650 and 660, respectively. Accordingly, to newly establish F1 connections with multiple CUs after handover to the IAB-donor 108B, the IAB-node 104 (*e.g.,* IAB-DU 174C) can establish a (third) F1 connection with the IAB-donor 108B, and a (fourth) F1 connection with the IAB-donor 108A via the IAB-donor 108B, similar to the manner in which the IAB-node 104 established the first F1 connection and the second F1 connection before handover to the IAB-donor 10B, as described further below.

To establish the third F1 connection with the IAB-donor 108B, the IAB-node 104 performs an F1 connection establishment procedure 676 to establish the third F1 connection with the IAB-donor 108B. To initiate the F1 connection establishment procedure 676, the IAB-node 104 determines to perform 616 a (third) F1 Setup procedure with the IAB-donor 108B. To perform the third F1 Setup procedure, the IAB-node 104 transmits 618 a third *F1 Setup Request* message, similar to event 508, except to the IAB-donor 108B. In response to receiving the third *F1 Setup Request* message, the IAB-donor 108B can initiate or create the third F1-C interface instance for exchanging F 1AP messages with the IAB-node 104 and subsequently send 512 a third *F1 Setup Response* message to the IAB-node 104, similar to event 512, except the IAB-donor 108B is performing the event. As a result of completing the third F1 Setup procedure with the IAB-donor 108B, the IAB-node 104 (*e.g.,* IAB-DU 174C) establishes 622 the third F1 connection, similar to event 514, except with the IAB-donor 108B (*e.g.,* the IAB-donor-CU 172B). Consequently, similar to the manner in which the IAB-node 104 can exchange F1AP messages with the IAB-donor 108A over the first F1 connection, the IAB-node 104 can exchange F1AP messages with the IAB-donor 108B over the third F1 connection. The events 616, 618, 620, and 622 can be collectively referred as the F1 connection establishment procedure 676.

In some implementations, the IAB-node 104 may perform (*i.e.,* establish) a third TNLA with the IAB-donor 108B after handing over to the IAB-donor 108B. In some implementations, the IAB-node 104 and the IAB-donor 108B can establish the third TNLA by associating a TNL address of the IAB-node 104 (*e.g.,* the first, the third, or another TNL address) with a TNL address of the IAB-donor 108B (*e.g.,* the fourth TNL address or another TNL address). For example, after handing over to the IAB-donor 108B, the IAB-node 104 can generate a packet including a F1AP message (*e.g.,* the third *F1 Setup Request* message), the TNL protocol header(s), the TNL address of the IAB-node 104 (*i.e.,* source address), and the TNL address of the IAB-donor 108B (*i.e.,* target address), and send the packet to the IAB-donor 108B. Similarly, after the IAB-node 104 hands over to the IAB-donor 108B, the IAB-donor 108B can generate a packet including a F1AP message (*e.g.,* the third *F1 Setup Response* message), the TNL protocol header(s), the TNL address of the IAB-donor 108B (*i.e.,* source address), and the TNL address of the IAB-node 104 (*i.e.,* target address), and send the packet to the IAB-node 104.

In other implementations, after handing over to the IAB-donor 108B, the IAB-node 104 continues using the second TNLA instead of performing a TNLA (*e.g.,* the third TNLA) with the IAB-donor 108B. For example, after handing over to the IAB-donor 108B, the IAB-node 104 can generate a packet including a F1AP message (*e.g.,* the third *F1 Setup Request* message), the TNL protocol header(s), the third TNL address of the IAB-node 014 (*i.e.,* source address), and the fourth TNL address of the IAB-donor 108B (*i.e.,* target address), and send the packet to the IAB-donor 108B. Similarly, after the IAB-node 104 hands over to the IAB-donor 108B, the IAB-donor 108B can generate a packet including a F1AP message (*e.g.,* the third *F1 Setup Response* message), the TNL protocol header(s), the fourth TNL address of the IAB-donor 108B (*i.e.,* source address), and the third TNL address of the IAB-node 104 (*i.e.,* target address), and send the packet to the IAB-node 104.

During or after performing the F1 connection establishment procedure 676, in some implementations, the IAB-node 104 performs another (fourth) F1 connection establishment procedure 680, similar to the manner in which the IAB-node 104 performs the second F1 connection establishment procedure 660, except the IAB-node 104 performs the fourth F1 connection establishment procedure 680 to establish another (fourth) F1 connection with the IAB-donor 108A via the IAB-donor 108B. In some implementations, the IAB-node 104 may be triggered by the IAB-donor 108B, O&M node, or otherwise pre-configured to perform the fourth F1 connection establishment procedure 680 in similar ways described above with respect to the second F1 connection establishment procedure 660.

To initiate the fourth F1 connection establishment procedure 680, the IAB-node 104 performs another (fourth) F1 Setup procedure with the IAB-donor 108B to establish a (fourth) F1 connection (*e.g*., F1-C connection) with the IAB-donor 108A via the IAB-donor 108B, so that the IAB-node 104 (*e.g.,* IAB-DU 174C) can exchange F1AP messages with the IAB-donor 108A (*e.g.,* IAB-donor-CU 172B) on the fourth F1 interface or connection.

To perform the fourth F1 Setup procedure, the IAB-node 104 transmits 630 a fourth *F1 Setup Request* message, similar to event 516, except to the IAB-donor 108B. In response to receiving the fourth *F1 Setup Request* message, the IAB-donor 108B determines that the fourth *F1 Setup Request* message is for the IAB-donor 108A, similar to the manner in which the IAB-donor 108A determines that the second *F1 Setup Request* message is for the IAB-donor 108B. Consequently, the IAB-donor 108B sends 632 the fourth *F1 Setup Request* message to the IAB-donor 108A (*e.g*., IAB-donor-CU 172A), similar to the manner in which the IAB-donor 108A sends 518 the second *F1 Setup Request* message to the IAB-donor 108B (*e.g.,* directly over a BS to BS interface).

In response to receiving 632 the fourth *F1 Setup Request* message, the IAB-donor 108A can initiate or create the fourth F1-C interface instance for exchanging F1AP messages with the IAB-node 104 and subsequently send 634 a fourth *F1 Setup Response* message directly to the IAB-donor 108B, similar to the manner in which the IAB-donor 108B sends 522 the second *F1 Setup Response* message directly to the IAB-donor 108A. In turn, the IAB-donor 108B transmits 636 the fourth *F1 Setup Response* message to the IAB-node 104, similar to the manner in which the IAB-donor 108A sends 524 the second *F1 Setup Response* message to the IAB-node 104. As a result of completing the fourth F1 Setup procedure with the IAB-donor 108A, the IAB-node 104 (*e.g.,* IAB-DU 174C) establishes 640 the fourth F1 connection with the IAB-donor 108A via the IAB-donor 108B. Consequently, the IAB-node 104 can exchange F1AP messages with the IAB-donor 108A via the IAB-donor 108B over the fourth F1 connection. The events 630, 632, 634, 636, and 640 can be collectively referred as the F1 connection establishment procedure 680.

In some implementations, after handing over to the IAB-donor 108B, the IAB-node 104 may perform (*i.e.,* establish) a fourth TNLA with the IAB-donor 108A, *e.g.,* via the IAB-donor 108B or CN 110. In some implementations, the IAB-node 104 and the IAB-donor 108A can establish the fourth TNLA by associating a TNL address of the IAB-node 104 (*e.g.,* the first, the third or another TNL address) with a TNL address of the IAB-donor 108A (*e.g.,* the second TNL address or another TNL address). For example, after handing over to the IAB-donor 108B, the IAB-node 104 can generate a packet including a F1AP message (*e.g*., the fourth *F1 Setup Request* message), the TNL protocol header(s), the TNL address of the IAB-node 104 (*i.e.,* source address), and the TNL address of the IAB-donor 108A (*i.e.,* target address), and send the packet to the IAB-donor 108A via the IAB-donor 108B or CN 110. Similarly, after the IAB-node 104 hands over to the IAB-donor 108B, the IAB-donor 108A can generate a packet including a F1AP message (*e.g.,* the fourth *F1 Setup Response* message), the TNL protocol header(s), the TNL address of the IAB-donor 108A (*i.e.,* source address), and the TNL address of the IAB-node 104 (*i.e.,* target address), and send the packet to the IAB-node 104 via the IAB-donor 108B or CN 110.

In other implementations, after handing over to the IAB-donor 108B, the IAB-node 104 continues using the first TNLA, instead of performing a TNLA (*e.g.,* the fourth TNLA) with the IAB-donor 108A. For example, after handing over to the IAB-donor 108B, the IAB-node 104 can generate a packet including a F1AP message (*e.g.,* the fourth *F1 Setup Request* message), the TNL protocol header(s), the first TNL address of the IAB-node 104 (*i.e.,* source address), and the second TNL address of the IAB-donor 108A (*i.e.,* target address), and send the packet to the IAB-donor 108A via the IAB-donor 108B or CN 110. Similarly, after the IAB-node 104 hands over to the IAB-donor 108B, the IAB-donor 108B can generate a packet including a F1AP message (*e.g.,* the third *F1 Setup Response* message), the TNL protocol header(s), the second TNL address of the IAB-donor 108A (*i.e.,* source address), and the first TNL address of the IAB-node 104 (*i.e.,* target address), and send the packet to the IAB-node 104 via the IAB-donor 108B or CN 110.

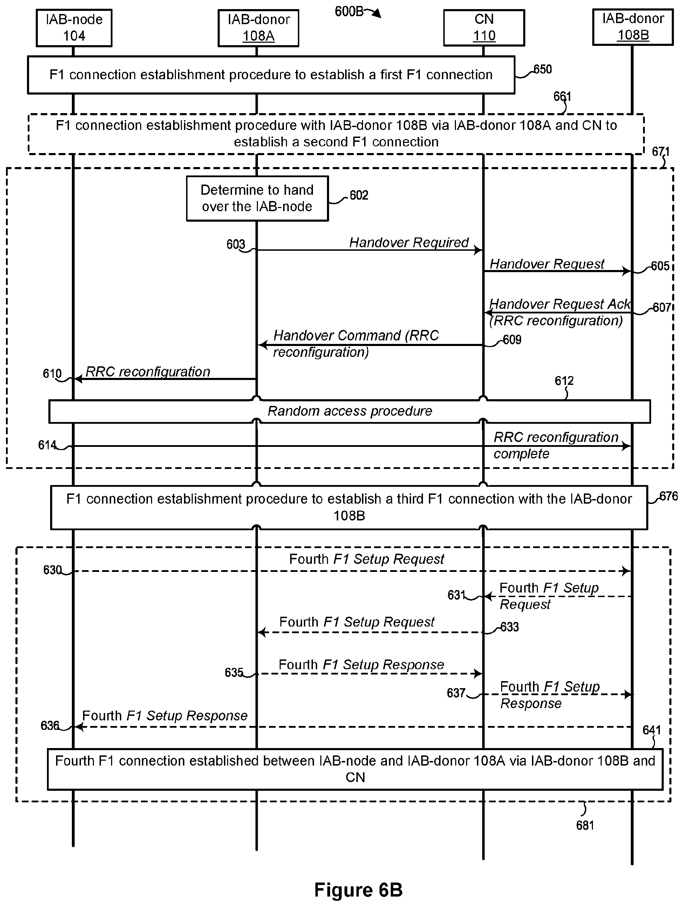

Now referring to Fig. 6B, whereas the IAB-donor 108A and IAB-donor 108B of Fig. 6A can communicate directly with each other over an established BS to BS interface, the IAB-donor 108A and IAB-donor 108B of Fig. 6B do not have a BS to BS interface established between them. As such, the CN 110 can coordinate communications between the IAB-donor 108A and IAB-donor 108B. Otherwise, any of the implementations described above in reference to Fig. 6A can be applied to scenario 600B of Fig. 6B.

Similar to scenario 600A, in scenario 600B of Fig. 6B, the IAB-node 104 initially performs an F1 connection establishment procedure 650 to establish an F1 connection with the IAB-donor 108A. During or after performing the F1 connection establishment procedure 650, the IAB-node 104 performs a second F1 connection establishment procedure 661 to establish a second F1 connection with the IAB-donor 108B via the IAB-donor 108A and the CN 110, similar to the F1 connection establishment procedure 561.

The IAB-donor 108A at some point determines that it should handover the IAB-node 104 to the IAB-donor 108B, and thus performs a IAB-node handover procedure 671, similar to the IAB-node handover procedure 670, except the CN 110 is involved. Particularly, to initiate the IAB-node handover procedure 671, the IAB-donor 108A determines 602 to hand over the IAB-node 104 to the IAB-donor 108B and subsequently sends 603 a *Handover Required* message for preparing the handover of the IAB-node 104 to the CN 110. In turn, the CN 110 sends 605 a *Handover Request* message to the IAB-donor 108B. In response, the IAB-donor 108B sends 607 a *Handover Request Acknowledge* message including an RRC reconfiguration message to the CN 110, which in turn sends 609 a *Handover Command* message (*i.e.,* an *NGAP* message) including the RRC reconfiguration message to the IAB-donor 108A. The IAB-donor 108A then sends 610 the handover command message to the IAB-node 104, which in turn attempts to perform handover in accordance with the handover command message.

In some implementations, the IAB-node 104 can perform 612 a random access procedure, if instructed in the RRC reconfiguration message, with the IAB-donor 108B. In response to the RRC reconfiguration message, the IAB-node 104 sends 614 an RRC reconfiguration complete message to the IAB-donor 108B during or after the random procedure (if performed). The events 602, 603, 605, 607, 609, 610, 612, and 614 can be collectively referred as the IAB-node handover procedure 671.

While performing or after completing the IAB-node handover procedure 671, in some implementations, the IAB-node 104 releases the first and second F1 connections physically established at events 650 and 661, respectively. Accordingly, to newly establish F1 connections with multiple CUs after handover to the IAB-donor 108B, the IAB-node 104 (*e.g.,* IAB-DU 174C) can establish a (third) F1 connection with the IAB-donor 108B, and a (fourth) F1 connection with the IAB-donor 108A via the IAB-donor 108B and the CN 110.

To establish the third F1 connection with the IAB-donor 108B, the IAB-node 104 performs the F1 connection establishment procedure 676 to establish the third F1 connection with the IAB-donor 108B, as described above.

During or after performing the F1 connection establishment procedure 676, in some implementations, the IAB-node 104 performs another (fourth) F1 connection establishment procedure 681, similar to the F1 connection establishment procedure 680, except the CN 110 is involved to establish another (fourth) F1 connection with the IAB-donor 108A via the IAB-donor 108B and the CN 110.

To initiate the fourth F1 connection establishment procedure 681, the IAB-node 104 performs another (fourth) F1 Setup procedure with the IAB-donor 108B to establish a (fourth) F1 connection (*e.g*., F1-C connection) with the IAB-donor 108A via the IAB-donor 108B and the CN 110, so that the IAB-node 104 (*e.g.,* IAB-DU 174C) can exchange F1AP messages with the IAB-donor 108A (*e.g.*, IAB-donor-CU 172B) on the fourth F1 interface or connection.

To perform the fourth F1 Setup procedure, the IAB-node 104 transmits 630 a fourth *F1 Setup Request* message. In response to receiving the fourth *F1 Setup Request* message, the IAB-donor 108B determines that the fourth *F1 Setup Request* message is for the IAB-donor 108A. Consequently, the IAB-donor 108B sends 631 the fourth *F1 Setup Request* message to the CN 110, which in turn forwards 633 the fourth *F1 Setup Request* message to the IAB-donor 108A (*e.g.*, IAB-donor-CU 172A).

In response to receiving 633 the fourth *F1 Setup Request* message, the IAB-donor 108A can initiate or create the fourth F1-C interface instance for exchanging F1AP messages with the IAB-node 104 and subsequently send 635 a fourth *F1 Setup Response* message to the CN 110, which in turn forwards 637 the fourth *F1 Setup Response* message to the IAB-donor 108B. In turn, the IAB-donor 108B transmits 636 the fourth *F1 Setup Response* message to the IAB-node 104. As a result of completing the fourth F1 Setup procedure with the IAB-donor 108A, the IAB-node 104 (*e.g.,* IAB-DU 174C) establishes 641 the fourth F1 connection with the IAB-donor 108A via the IAB-donor 108B and the CN 110. Consequently, the IAB-node 104 can exchange F1AP messages with the IAB-donor 108A via the IAB-donor 108B and the CN 110 over the fourth F1 connection. The events 630, 631, 633, 635, 637, 636, and 641 can be collectively referred as the F1 connection establishment procedure 681.

In some implementations, after handing over to the IAB-donor 108B, the IAB-node 104 may perform (*i.e.,* establish) a fourth TNLA with the IAB-donor 108A via the CN 110. In some implementations, the IAB-node 104 and the IAB-donor 108A can establish the fourth TNLA by associating a TNL address of the IAB-node 104 (*e.g.,* the first, the third, or another TNL address) with a TNL address of the IAB-donor 108A (*e.g.,* the second TNL address or another TNL address). For example, after handing over to the IAB-donor 108B, the IAB-node 104 can generate a packet including a F1AP message (*e.g.,* the fourth *F1 Setup Request* message), the TNL protocol header(s), the TNL address of the IAB-node 104 (*i.e.,* source address), and the TNL address of the IAB-donor 108A (*i.e.,* target address), and send the packet to the IAB-donor 108A via the CN 110. Similarly, after the IAB-node 104 hands over to the IAB-donor 108B, the IAB-donor 108A can generate a packet including a F1AP message (*e.g.,* the fourth *F1 Setup Response* message), the TNL protocol header(s), the TNL address of the IAB-donor 108A (*i.e.,* source address), and the TNL address of the IAB-node *104* (*i.e.,* target address), and send the packet to the IAB-node 104 via the CN 110.

In other implementations, after handing over to the IAB-donor 108B, the IAB-node 104 continues using the first TNLA, instead of performing a TNLA (*e.g.,* the fourth TNLA) with the IAB-donor 108A. For example, after handing over to the IAB-donor 108B, the IAB-node 104 can generate a packet including a F1AP message (*e.g.,* the fourth *F1 Setup Request* message), the TNL protocol header(s), the first TNL address of the IAB-node 104 (*i.e.,* source address), and the second TNL address of the IAB-donor 108A (*i.e.,* target address), and send the packet to the IAB-donor 108A via the CN 110. Similarly, after the IAB-node 104 hands over to the IAB-donor 108B, the IAB-donor 108B can generate a packet including a F1AP message (*e.g.,* the third *F1 Setup Response* message), the TNL protocol header(s), the second TNL address of the IAB-donor 108A (*i.e.,* source address), and the first TNL address of the IAB-node 104 (*i.e.,* target address), and send the packet to the IAB-node 104 via the CN 110.

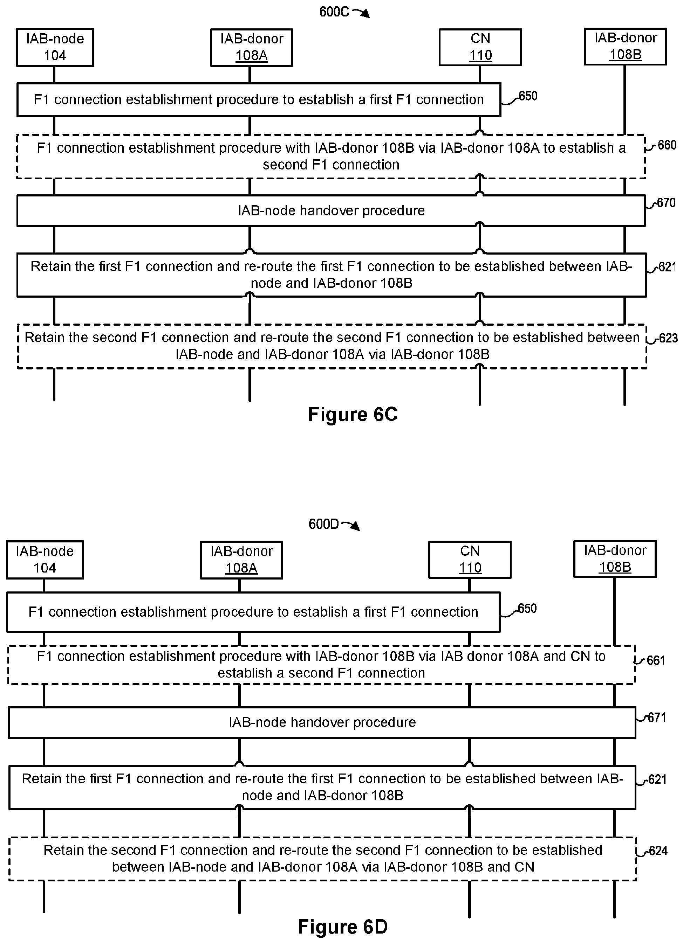

Now referring to Fig. 6C, whereas the IAB-node 104 of Fig. 6A releases the first and second F1 connections physically established at respective events 650 and 660 and newly establishes the third and fourth F1 connections as described in F1 connection establishment procedure 676 and F1 connection establishment procedure 680 after the IAB-node handover procedure 670, the IAB-node 104 of Fig. 6C retains the first and second F1 connections and physically re-routes the first and second F1 connections, as shown at events 621 and 623. Accordingly, the IAB-node 104 need not newly establish the third and fourth F1 connections. Otherwise, any of the implementations described above in reference to Fig. 6A can be applied to scenario 600C of Fig. 6C.

Particularly, at event 621, the IAB-node 104 retains the first F1 connection and physically re-routes the first F1 connection so that the first F1 connection is re-established between the IAB-node 104 and the IAB-donor 108B. The re-routed first F1 connection can maintain its logical first transaction identifier. Similarly, at event 623, the IAB-node 104 retains the second F1 connection and physically re-routes the second F1 connection so that the second F1 connection is re-established between the IAB-node 104 and the IAB-donor 108A via the IAB-donor 108B. The re-routed second F1 connection can maintain its logical second transaction identifier.

Now referring to Fig. 6D, whereas the IAB-node 104 of Fig. 6B releases the first and second F1 connections physically established at respective events 650 and 661 and newly establishes the third and fourth F1 connections as described in F1 connection establishment procedure 676 and F1 connection establishment procedure 681 after the IAB-node handover procedure 671, the IAB-node 104 of Fig. 6D retains the first and second F1 connections and physically re-routes the first and second F1 connections, as shown at events 621 and 624. Accordingly, the IAB-node 104 need not newly establish the third and fourth F1 connections. Otherwise, any of the implementations described above in reference to Fig. 6B can be applied to scenario 600D of Fig. 6D.

Particularly, at event 621, the IAB-node 104 retains the first F1 connection and physically re-routes the first F1 connection so that the first F1 connection is re-established between the IAB-node 104 and the IAB-donor 108B. The re-routed first F1 connection can maintain its logical first transaction identifier. Similarly, at event 624, the IAB-node 104 retains the second F1 connection and physically re-routes the second F1 connection so that the second F1 connection is re-established between the IAB-node 104 and the IAB-donor 108A via the IAB-donor 108B and the CN 110. The re-routed second F1 connection can maintain its logical second transaction identifier.

Now referring to Fig. 7A, whereas the IAB-donor 108A of Fig. 6A can initiate an IAB-node handover procedure for immediate handover of the IAB-node 104, the IAB-donor 108A of Fig. 7A can initiate an IAB-node handover procedure for conditional handover (CHO) of the IAB-node 104. Otherwise, any of the implementations described above in reference to Fig. 6A can be applied to scenario 700A of Fig. 7A.

Similar to scenario 600A, in scenario 700A of Fig. 7A, the IAB-node 104 performs an F1 connection establishment procedure 750 to establish an F1 connection with the IAB-donor 108A, similar to the F1 connection establishment procedure 650. During or after performing the F1 connection establishment procedure 750, the IAB-node 104 performs a second F1 connection establishment procedure 760 to establish a second F1 connection with the IAB-donor 108B via the IAB-donor 108A, similar to the F1 connection establishment procedure 660.

The IAB-donor 108A at some point determines 702 that it should handover the IAB-node 104 to the IAB-donor 108B, similar to event 602, except the IAB-donor 108A determines that the IAB-node 104 should conditionally handover to the IAB-donor 108B if the IAB-node 104 determines that a condition associated with a conditional configuration is satisfied. The condition as used herein may refer to a single, detectable state or event (*e.g.,* a particular signal quality metric exceeding a threshold), or to a logical combination of such states or events (*e.g*., Condition A and Condition B, or (Condition A or Condition B) and Condition C, etc.). In response to this determination, the IAB-donor 108A sends 704 a Conditional Handover Request message (*e.g., a Handover Request* message including a CHO information request), to the IAB-donor 108B.

In response to receiving 704 the *Handover Request* message, the IAB-donor 108B generates a conditional configuration, which includes information that would enable the IAB-node 104 (*e.g.,* IAB-MT 132) to communicate with the IAB-donor 108B via a candidate cell. The IAB-donor 108B includes the conditional configuration in a Conditional Handover Request Acknowledge message (*e.g., a Handover Request Acknowledge* message) for the IAB-node 104, and subsequently transmits 706 the Conditional Handover Request Acknowledge message to the IAB-donor 108A in response to the Conditional Handover Request message. In some implementations, instead of including the conditional configuration in the Conditional Handover Request Acknowledge message, the IAB-donor 108B may include a CHO command in the Conditional Handover Request Acknowledge message. In other cases, the IAB-donor 108B can include the conditional configuration in the CHO command, and include the CHO command in the Conditional Handover Request Acknowledge message.

The IAB-donor 108A transmits 710 an RRC reconfiguration message including the conditional configuration or CHO command to the IAB-node 104, which in turn optionally transmits 740 an RRC reconfiguration complete message to the IAB-donor 108A in response to receiving the RRC reconfiguration message. In some implementations, the IAB-donor 108A includes, in the conditional configuration or in the RRC reconfiguration message, a condition (or conditions) for the IAB-node 104 to detect, so that the IAB-node 104 can communicate with the IAB-donor 108B if the condition is satisfied. The IAB-donor 108A can include the conditional configuration in a conditional configuration field or information element (IE) (*e.g., CondReconfigToAddMod-r16* IE) of the RRC reconfiguration message. The IAB-donor 108A can further include a configuration identity/identifier (ID) associated to the conditional configuration in the conditional configuration field/IE, so that the IAB-node 104 can identify and store the conditional configuration. The IAB-donor 108A may allocate the configuration ID, or receive the configuration ID from the IAB-donor 108B.

In accordance with the RRC reconfiguration message, the IAB-node 104 performs CHO upon detecting 742 the condition(s) for connecting to a candidate cell associated with the IAB-donor 108B. In response to detecting the condition(s), the IAB-node 104 can perform 712 a random access procedure with the IAB-donor 108B on the candidate cell. In response to the RRC reconfiguration message, the IAB-node 104 sends 714 an RRC reconfiguration complete message to the IAB-donor 108B during or after the random procedure (if performed). In some implementations, the IAB-donor 108B can send a *Handover Success* message to the IAB-donor 108A to indicate that the IAB-node 104 successfully hands over to the IAB-donor 108B, after receiving 714 the RRC reconfiguration complete message.

The events 702, 704, 706, 710, 740, 742, 712, and 714 can be collectively referred as the IAB-node conditional handover procedure 770.

While performing or after completing the IAB-node conditional handover procedure 770, in some implementations, the IAB-node 104 performs an F1 connection establishment procedure 776 to establish the third F1 connection with the IAB-donor 108B, similar to F1 connection establishment procedure 676.

During or after performing the F1 connection establishment procedure 776, in some implementations, the IAB-node 104 performs F1 connection establishment procedure 780, similar to F1 connection establishment procedure 680, to establish the fourth F1 connection with the IAB-donor 108A via the IAB-donor 108B.

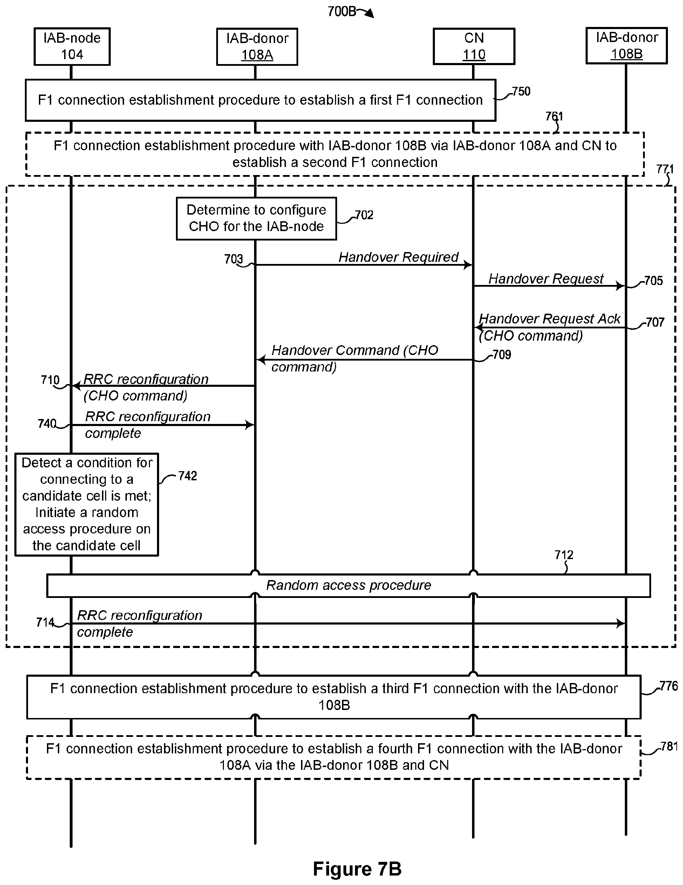

Now referring to Fig. 7B, whereas the IAB-donor 108A and IAB-donor 108B of Fig. 7A can communicate directly with each other over an established BS to BS interface, the IAB-donor 108A and IAB-donor 108B of Fig. 7B do not have a BS to BS interface established between them. As such, the CN 110 can coordinate communications between the IAB-donor 108A and IAB-donor 108B. Otherwise, any of the implementations described above in reference to Fig. 7A can be applied to scenario 700B of Fig. 7B.

Similar to scenario 700A, in scenario 700B of Fig. 7B, the IAB-node 104 initially performs an F1 connection establishment procedure 750 to establish an F1 connection with the IAB-donor 108A. During or after performing the F1 connection establishment procedure 750, the IAB-node 104 performs a second F1 connection establishment procedure 761 to establish a second F1 connection with the IAB-donor 108B via the IAB-donor 108A and the CN 110, similar to the F1 connection establishment procedure 661.

The IAB-donor 108A at some point determines that it should configure the IAB-node 104 to perform a CHO to the IAB-donor 108B, and thus performs a IAB-node conditional handover procedure 771, similar to the IAB-node conditional handover procedure 770, except the CN 110 is involved. Particularly, to initiate the IAB-node conditional handover procedure 771, the IAB-donor 108A determines 702 that the IAB-node 104 should conditionally handover to the IAB-donor 108B if the IAB-node 104 determines that a condition associated with a conditional configuration is satisfied. In response to this determination, the IAB-donor 108A sends 703 a Conditional Handover Required message (*e.g., a Handover Required* message including a CHO information request), to the CN 110. In turn, the CN 110 sends 705 a Conditional Handover Request message (*e.g., a Handover Request* message including the CHO information request) to the IAB-donor 108B. In response, the IAB-donor 108B includes a conditional configuration or CHO command as described above in a Conditional Handover Request Acknowledge message (*e.g., a Handover Request Acknowledge* message) for the IAB-node 104, and subsequently transmits 707 the Conditional Handover Request Acknowledge message to the CN 110, which in turn forwards the Conditional Handover Request Acknowledge message to the IAB-donor 108A.

The IAB-donor 108A transmits 710 an RRC reconfiguration message including the conditional configuration or CHO command to the IAB-node 104, which in turn optionally transmits 740 an RRC reconfiguration complete message to the IAB-donor 108A in response to receiving the RRC reconfiguration message.

In accordance with the RRC reconfiguration message, the IAB-node 104 performs CHO upon detecting 742 the condition(s) for connecting to a candidate cell associated with the IAB-donor 108B. In response to detecting the condition(s), the IAB-node 104 can perform 712 a random access procedure with the IAB-donor 108B on the candidate cell. In response to the RRC reconfiguration message, the IAB-node 104 sends 714 an RRC reconfiguration complete message to the IAB-donor 108B during or after the random procedure (if performed). The events 702, 703, 705, 707, 709, 710, 740, 742, 712, and 714 can be collectively referred as the IAB-node conditional handover procedure 771.

While performing or after completing the IAB-node conditional handover procedure 771, in some implementations, the IAB-node 104 performs an F1 connection establishment procedure 776 to establish the third F1 connection with the IAB-donor 108B.

During or after performing the F1 connection establishment procedure 776, in some implementations, the IAB-node 104 performs F1 connection establishment procedure 781, similar to F1 connection establishment procedure 681, to establish the fourth F1 connection with the IAB-donor 108A via the IAB-donor 108B and the CN 110.

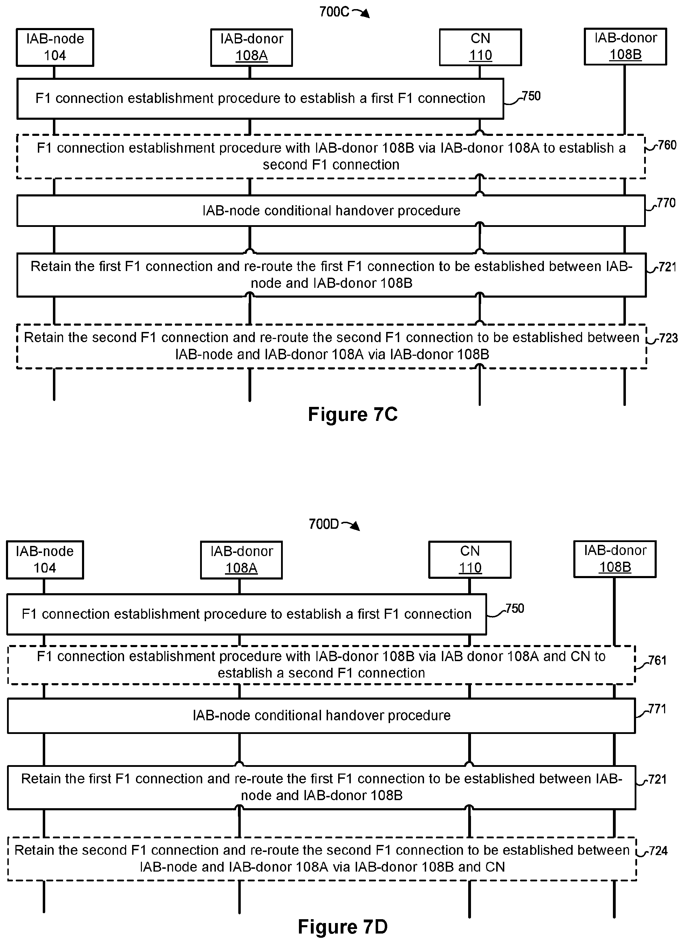

Now referring to Fig. 7C, whereas the IAB-node 104 of Fig. 7A releases the first and second F1 connections physically established at respective events 750 and 760 and newly establishes the third and fourth F1 connections as described in F1 connection establishment procedure 776 and F1 connection establishment procedure 780 after the IAB-node conditional handover procedure 770, the IAB-node 104 of Fig. 7C retains the first and second F1 connections and physically re-routes the first and second F1 connections, as shown at events 721 and 723. Accordingly, the IAB-node 104 need not newly establish the third and fourth F1 connections. Otherwise, any of the implementations described above in reference to Fig. 7A can be applied to scenario 700C of Fig. 7C.

Particularly, at event 721, the IAB-node 104 retains the first F1 connection and physically re-routes the first F1 connection so that the first F1 connection is re-established between the IAB-node 104 and the IAB-donor 108B. The re-routed first F1 connection can maintain its logical first transaction identifier. Similarly, at event 723, the IAB-node 104 retains the second F1 connection and physically re-routes the second F1 connection so that the second F1 connection is re-established between the IAB-node 104 and the IAB-donor 108A via the IAB-donor 108B. The re-routed second F1 connection can maintain its logical second transaction identifier.

Now referring to Fig. 7D, whereas the IAB-node 104 of Fig. 7B releases the first and second F1 connections physically established at respective events 750 and 761 and newly establishes the third and fourth F1 connections as described in F1 connection establishment procedure 776 and F1 connection establishment procedure 781 after the IAB-node conditional handover procedure 671, the IAB-node 104 of Fig. 7D retains the first and second F1 connections and physically re-routes the first and second F1 connections, as shown at events 721 and 724. Accordingly, the IAB-node 104 need not newly establish the third and fourth F1 connections. Otherwise, any of the implementations described above in reference to Fig. 7B can be applied to scenario 700D of Fig. 7D.

Particularly, at event 721, the IAB-node 104 retains the first F1 connection and physically re-routes the first F1 connection so that the first F1 connection is re-established between the IAB-node 104 and the IAB-donor 108B. The re-routed first F1 connection can maintain its logical first transaction identifier. Similarly, at event 724, the IAB-node 104 retains the second F1 connection and physically re-routes the second F1 connection so that the second F1 connection is re-established between the IAB-node 104 and the IAB-donor 108A via the IAB-donor 108B and the CN 110. The re-routed second F1 connection can maintain its logical second transaction identifier.

Now referring to Fig. 8A, whereas the IAB-donor 108A of Fig. 6A determines to hand over the IAB-node 104 after the first and second F1 connections are established, the IAB-donor 108A of Fig. 8A determines to hand over the UE 102 after the first and second F1 connections are established, prior to determining to hand over the IAB-node 104.

Similar to scenario 600A, in scenario 800A of Fig. 8A, the IAB-node 104 performs an F1 connection establishment procedure 850 to establish an F1 connection with the IAB-donor 108A, similar to the F1 connection establishment procedure 650. During or after performing the F1 connection establishment procedure 850, the IAB-node 104 performs a second F1 connection establishment procedure 860 to establish a second F1 connection with the IAB-donor 108B via the IAB-donor 108A, similar to the F1 connection establishment procedure 660.

As a result of the F1 connection establishment procedure 850, the IAB-donor 108A can serve the UE 102 via the IAB-node 104. The UE 102 communicates 802 data (*e.g.,* uplink and/or downlink PDUs) with the IAB-donor 108A via the IAB-node 104, *e.g.,* in accordance with a source IAB-donor configuration. The UE 102 can also communicate 802 data with the CN 110 via the IAB-donor 108A and the IAB-node 104.

Later in time, the IAB-donor 108A can determine 804 to hand over the UE 102 to the IAB-donor 108B. The IAB-donor 108A can make this determination based on one or more measurement results received from the IAB-node 104 and/or the UE 102, for example, or another suitable event (*e.g*., topology change commanded by a network node such as the O&M node). In response to the determination, the IAB-donor 108A begins to perform the UE handover procedure 894, by sending 806 a *Handover Request* message for the UE 102 to the IAB-donor 108B.

In response to receiving 806 the *Handover Request* message, the IAB-donor 108B sends 816 a *Handover Request Acknowledge* message including an RRC reconfiguration message for the UE 102 to the IAB-donor 108A. In some implementations, after receiving the *Handover Request* message, the IAB-donor 108B can send a UE Context Request message to the IAB-node 104 via the IAB-donor 108A over the second F1 connection established by the F1 connection establishment procedure 860. That is, using the second F1 connection, the IAB-donor 108B can send 808 the UE Context Request message to the IAB-donor 108A, *e.g.,* over a BS to BS interface, which in turn forwards 810 the UE Context Request message to the IAB-node 104. In response, the IAB-node 104 can send a UE Context Response message to the IAB-donor 108B via the IAB-donor 108A over the second F1 connection. That is, using the second F1 connection, the IAB-donor 108B can send 812 the UE Context Response message to the IAB-donor 108A, which in turn forwards 814 the UE Context Response message to the IAB-donor 108B, *e.g.,* over a BS to BS interface. In some implementations, the IAB-node 104 may include a DU configuration (*e.g*., a *CellGroupConfig* IE) in the UE Context Response message at event 812, and the IAB-donor 108B can include the DU configuration in the RRC reconfiguration message at event 816. In some implementations, the IAB-donor 108B sends 808 a BS to BS interface message (*e.g*., XnAP message or GTP-U packet) including the UE Context Request message to the IAB-donor 108A, and the IAB-donor 108A sends 814 a BS to BS interface message (*e.g*., XnAP message or GTP-U packet) including the UE Context Response message. In other implementations, the IAB-node 104 and IAB-donor 108B exchange the UE Context Request message and the UE Context Response message via the IAB-donor 108A or CN 110 by using the second TNLA as described above.

In some implementations, the UE Context Request message and UE Context Response message can be a *UE Context Setup Request* message and a *UE Context Setup Response* message, respectively. In other implementations, the UE Context Request message and UE Context Response message can be a *UE Context Modification Request* message and a *UE Context Modification Response* message, respectively. In some implementations, the UE Context Request message includes the BH RLC Channel to Be Setup (or Modified) List which may include the BH RLC CH ID, BH RLC CH QoS or E-UTRAN BH RLC CH QoS, Control Plane Traffic Type, RLC Mode, BAP Control PDU Channel, Traffic Mapping Information. The UE Context Request message may also include DRB to Be Setup (or Modified) List and BAP Address as defined in TS 38.473. In other implementations, the UE Context Request message may not include the BH RLC Channel to Be Setup (or Modified) List which may include the BH RLC CH ID, BH RLC CH QoS or E-UTRAN BH RLC CH QoS, Control Plane Traffic Type, RLC Mode, BAP Control PDU Channel, Traffic Mapping Information. The UE Context Request message may also include DRB to Be Setup (or Modified) List and BAP Address as defined in TS 38.473.

After the IAB-donor 108A receives 816 the RRC reconfiguration message, the IAB-donor 108A transmits 818 the RRC reconfiguration message to the IAB-node 104, which in turn forwards 820 the RRC reconfiguration message to the UE 102.

In some implementations, the UE 102 can perform 822 a random access procedure with the IAB-node 104, if instructed by the RRC reconfiguration message. In response to receiving 820 the RRC reconfiguration message, the UE 102 transmits 832 an RRC reconfiguration complete message to the IAB-node 104, which in turn transmits 834 the RRC reconfiguration complete message to the IAB-donor 108A. The IAB-donor 108A can then forward 840 the RRC reconfiguration complete message to the IAB-donor 108B, *e.g.,* over a BS to BS interface. In some implementations, the IAB-donor 108A sends a BS to BS interface message (*e.g*., XnAP message or GTP-U packet) including the RRC reconfiguration complete message to the IAB-donor 108B. In other implementations, the IAB-node 104 generates a F1AP message (*e.g., UL RRC Message Transfer* message) including the RRC reconfiguration complete message and sends the F1AP message to the IAB-donor 108B by using the second TNLA as described above.

In some implementations, after transmitting 820 the RRC reconfiguration message, performing the random access procedure 822 with UE 102, or receiving 832 the second RRC reconfiguration complete message, the IAB-node 104 can send 824 an F1-C message or an F1-U frame to the IAB-donor 108A, which in turn forwards 826 the F1-C message or an F1-U frame to the IAB-donor 108B, *e.g.,* over a BS to BS interface. In some implementation, the F1-C message or F1-U frame can be an *Access Success* message as defined in 3GPP specification 38.473 or a *DL Data Delivery Status* frame as defined in 3GPP specification 38.425. In some implementations, the IAB-donor 108A sends 826 a BS to BS interface message (*e.g*., XnAP message or GTP-U packet) including the F1-C message or F1-U frame to the IAB-donor 108B. In other implementations, the IAB-node 104 sends the F1-C message or F1-U frame to the IAB-donor 108B via the IAB-donor 108A or CN 110 by using the second TNLA as described above. Alternatively, the IAB-node 104 can send the F1-U frame to the IAB-donor 108B by using F1-U TNL protocols (*e.g*., GTP-U and IP) and the second TNLA. In yet other implementations, the IAB-node 104 sends the F1-U frame to the IAB by using a TNLA (*e.g.,* F1-U TNLA) different from the second TNLA. The IAB-node 104 can establish the F1-U TNLA with the IAB-donor 108B in similar ways as the second TNLA and send the F1-U frame to the IAB-donor 108B via the IAB-donor 108A or CN 110 by using F1-U TNL protocols and the F1-U TNLA addresses (*e.g*., a F1-U TNLA address of the IAB-node 104 and a F1-U TNLA address of the IAB-donor 108B).

In some implementations, after transmitting 806 the *Handover Request* message, receiving 816 the *Handover Request Acknowledge* message, or transmitting 818 the RRC reconfiguration message, the IAB-donor 108A can send 828 an *SN Status Transfer* message to the IAB-donor 108B to transfer UL PDCP SN and HFN receiver status and DL PDCP SN and HFN transmitter status for DRB(s) of the UE 102 if the DRB(s) use an RLC Acknowledged Mode. Alternatively, or in addition to sending 828 the *SN Status Transfer* message, the IAB-donor 108A can perform 830 DL data forwarding (*i.e.,* send DL data that the IAB-donor 108A received from CN 110, for the UE 102, to the IAB-donor 108B). In some implementations, the DL data can be DL data packet(s) (*e.g*., Internet Protocol (IP) packet(s)) that the IAB-donor 108A has not transmitted to the IAB-node 104. In other implementations, the DL data can be DL data packet(s) (*e.g.,* IP packet(s)) that the IAB-donor 108A has transmitted to the IAB-node 104 in the format of PDUs (*e.g.,* PDCP PDUs), but has not yet been acknowledged by the UE 102 or the IAB-node 104.

Although not shown, in some implementations, after receiving 836 the RRC reconfiguration complete message, the IAB-donor 108B can send a *Handover Success* message to the IAB-donor 108A to indicate successful handover of the UE 102 from the IAB-donor 108A to the IAB-donor 108B. In other implementations, after receiving the RRC reconfiguration complete message, the *SN Status Transfer* message, or DL data at events 836, 828, or 830 respectively, the IAB-donor 108B can send a *UE Context Release* message to the IAB-donor 108A to indicate successful handover of the UE 102 from the IAB-donor 108A to the IAB-donor 108B, or to indicate to the IAB-donor 108A that radio and control plane resources for the UE 102 and/or a context of the UE 102 are allowed to be released.

The events 806, 808, 810, 812, 814, 816, 818, 820, 822, 824, 826, 828, 830, 832, 834, and 836 can be collectively referred as the UE handover procedure 894.

During or after the UE handover procedure 894, the IAB-node 104 performs an IAB-node handover procedure 870, similar to the IAB-node handover procedure 670.

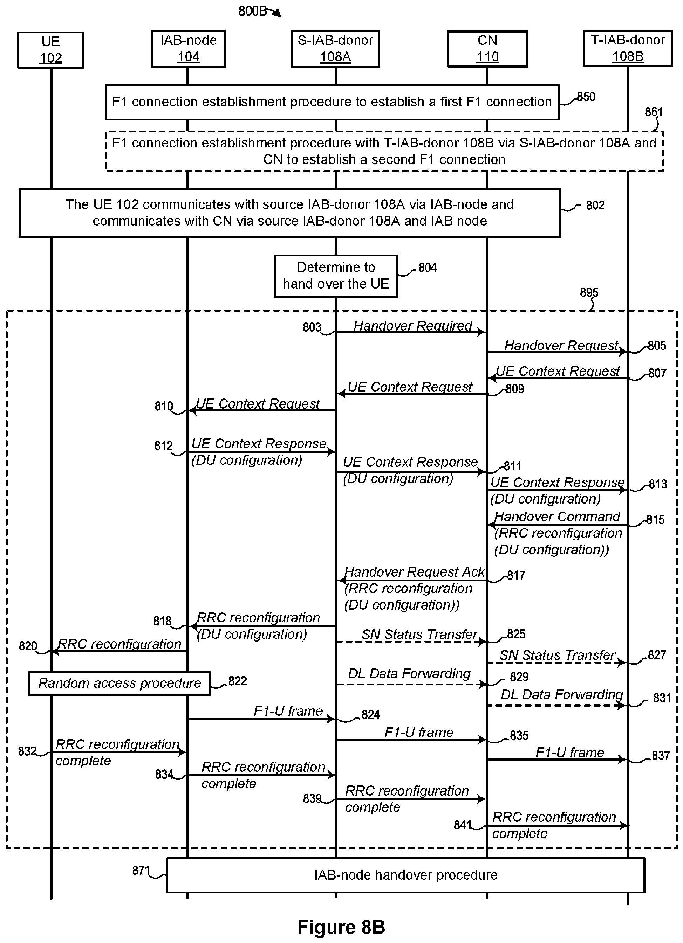

Now referring to Fig. 8B, whereas the IAB-donor 108A and IAB-donor 108B of Fig. 8A can communicate directly with each other over an established BS to BS interface, the IAB-donor 108A and IAB-donor 108B of Fig. 8B do not have a BS to BS interface established between them. As such, the CN 110 can coordinate communications between the IAB-donor 108A and IAB-donor 108B. Otherwise, any of the implementations described above in reference to Fig. 8A can be applied to scenario 800B of Fig. 8B.

Similar to scenario 800A, in scenario 800B of Fig. 8B, the IAB-node 104 initially performs the F1 connection establishment procedure 850 to establish an F1 connection with the IAB-donor 108A. During or after performing the F1 connection establishment procedure 850, the IAB-node 104 performs a second F1 connection establishment procedure 861 to establish a second F1 connection with the IAB-donor 108B via the IAB-donor 108A and the CN 110, similar to the F1 connection establishment procedure 661.

As a result of the F1 connection establishment procedure 850, the IAB-donor 108A can serve the UE 102 via the IAB-node 104. The UE 102 communicates 802 data with the IAB-donor 108A via the IAB-node 104. The UE 102 can also communicate 802 data with the CN 110 via the IAB-donor 108A and the IAB-node 104.

Later in time, the IAB-donor 108A can determine 804 to hand over the UE 102 to the IAB-donor 108B. In response to the determination, the IAB-donor 108A begins to perform the UE handover procedure 895, similar to the UE handover procedure 894, except the CN 110 is involved. Particularly, to initiate the UE handover procedure 895, by sending 803 a *Handover Required* message for preparing the handover of the UE 102 to the CN 110. In turn, the CN 110 sends 805 a *Handover Request* message for the UE 102 to the IAB-donor 108B.

In response to receiving 805 the *Handover Request* message, the IAB-donor 108B sends 815 a *Handover Command* message including an RRC reconfiguration message for the UE 102 to the CN 110, which in turn sends 817 a *Handover Request Acknowledge* message including the RRC reconfiguration message to the IAB-donor 108A. In some implementations, after receiving the *Handover Request* message, the IAB-donor 108B can send a UE Context Request message to the IAB-node 104 via the CN 110 and the IAB-donor 108A over the second F1 connection established by the F1 connection establishment procedure 861. That is, using the second F1 connection, the IAB-donor 108B can send 807 the UE Context Request message to the CN 110, which in turn forwards 809 the UE Context Request message to the IAB-donor 108A. In turn, the IAB-donor 108A forwards 810 the UE Context Request message to the IAB-node 104. In response, the IAB-node 104 can send a UE Context Response message to the IAB-donor 108B via the IAB-donor 108A and the CN 110 over the second F1 connection. That is, using the second F1 connection, the IAB-donor 108B can send 812 the UE Context Response message to the IAB-donor 108A, which in turn forwards 811 the UE Context Response message to the CN 110. In turn, the CN 110 forwards 813 the UE Context Response message to the IAB-donor 108B. In some implementations, the IAB-node 104 may include a DU configuration in the UE Context Response message at event 812, and the IAB-donor 108B can include the DU configuration in the RRC reconfiguration message at event 815.

In some implementations, the IAB-donor 108B sends 807 a BS to CN interface message (*e.g*., NGAP message or GTP-U packet) including the UE Context Request message to the CN 110, which in turn sends 809 a CN to BS interface message (*e.g.*, NGAP message or GTP-U packet) including the UE Context Request message to the IAB-donor 108A. The IAB-donor 108A sends 811 a BS to CN interface message (*e.g*., NGAP message or GTP-U packet) including the UE Context Response message to the CN 110, which in turn sends 813 a CN to BS interface message (*e.g*., NGAP message or GTP-U packet) including the UE Context Response message to the IAB-donor 108A. In other implementations, the IAB-node 104 and IAB-donor 108B exchange the UE Context Request message and the UE Context Response message via the IAB-donor 108A or CN 110 by using the second TNLA as described above.

After the IAB-donor 108A receives 817 the RRC reconfiguration message, the IAB-donor 108A transmits 818 the RRC reconfiguration message to the IAB-node 104, which in turn forwards 820 the RRC reconfiguration message to the UE 102.

In some implementations, the UE 102 can perform 822 a random access procedure with the IAB-node 104, if instructed by the RRC reconfiguration message. In response to receiving 820 the RRC reconfiguration message, the UE 102 transmits 832 an RRC reconfiguration complete message to the IAB-node 104, which in turn transmits 834 the RRC reconfiguration complete message to the IAB-donor 108A. The IAB-donor 108A can then forward 839 the RRC reconfiguration complete message to the CN 110, which in turn forwards 841 the RRC reconfiguration complete message to the IAB-donor 108B. In some implementations, the IAB-donor 108A sends 839 a BS to CN interface message (*e.g*., NGAP message) including the RRC reconfiguration complete message to the CN 110, which in turn sends 841 a CN to BS interface message (*e.g*., NGAP message or GTP-U packet) including the RRC reconfiguration complete message to the IAB-donor 108A. the IAB-node 104 generates a F1AP message (*e.g., UL RRC Message Transfer* message) including the RRC reconfiguration complete message and sends the F1AP message to the IAB-donor 108B by using the second TNLA as described above.

In some implementations, after transmitting 820 the RRC reconfiguration message, performing the random access procedure 822 with UE 102, or receiving 832 the second RRC reconfiguration complete message, the IAB-node 104 can send 824 an F1-C message or an F1-U frame to the IAB-donor 108A, which in turn forwards 835 the F1-C message or an F1-U frame to the CN 110. The CN 110 in turn forwards 837 the F1-C message or an F1-U frame to the IAB-donor 108B. In some implementations, the IAB-donor 108A sends 835 a BS to CN interface message (*e.g*., NGAP message or GTP-U packet) including the F1-C message or F1-U frame to the CN 110, which in turn sends 837 a CN to BS interface message (*e.g.,* NGAP message or GTP-U packet) including the F1-C message or F1-U frame to the IAB-donor 108B. In other implementations, the IAB-node 104 sends the F1-C message or F1-U frame to the IAB-donor 108B via the CN 110 or the IAB-donor 108A by using the second TNLA as described above.

In some implementations, after transmitting 805 the *Handover Required* message, receiving 817 the *Handover Request Acknowledge* message, or transmitting 818 the RRC reconfiguration message, the IAB-donor 108A can send 825 an *SN Status Transfer* message to the CN 110, which in turn forwards 827 the *SN Status Transfer* message to the IAB-donor 108B to transfer UL PDCP SN and HFN receiver status and DL PDCP SN and HFN transmitter status for DRB(s) of the UE 102 if the DRB(s) use an RLC Acknowledged Mode. Alternatively, or in addition to sending 825 the *SN Status Transfer* message, the IAB-donor 108A can perform 829 DL data forwarding to the CN 110, which in turn performs 831 DL data forwarding to the IAB-donor 108B.

The events 803, 805, 807, 809, 810, 812, 811, 813, 815, 817, 818, 820, 822, 824, 835, 837, 832, 834, 839, 841, 825, 827, 829, and 831 can be collectively referred as the UE handover procedure 895.

During or after the UE handover procedure 895, the IAB-node 104 performs an IAB-node handover procedure 871, similar to the IAB-node handover procedure 671.

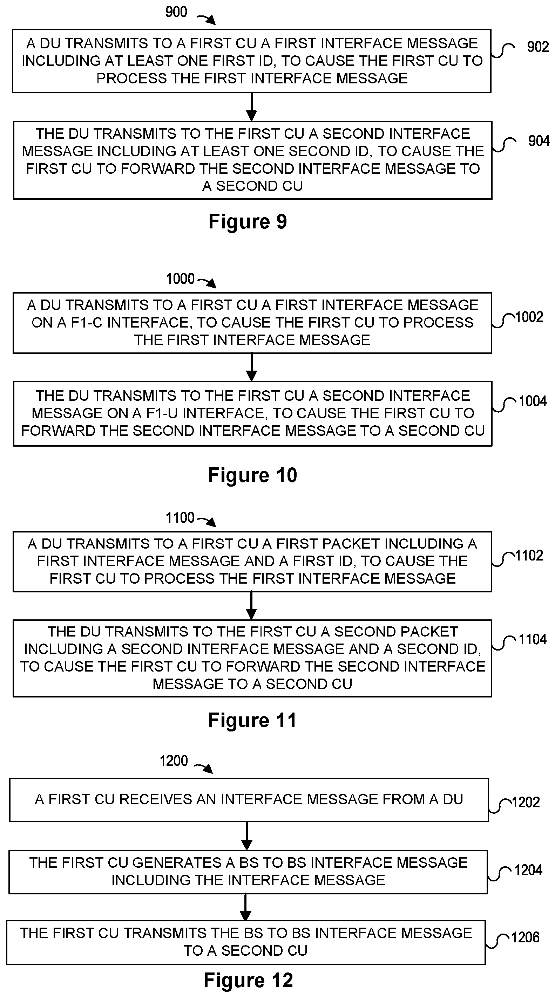

Referring now to Fig. 9, an example method 900 can be implemented in a DU transmitting interface messages to a respective first CU and second CU. In some implementations, the DU is an IAB-DU (*e.g.,* DU 174C), the first CU is a first IAB-donor-CU (*e.g.,* IAB-donor-CU 172A), and the second CU is a second IAB-donor-CU (*e.g.,* IAB-donor-CU 172B).

At block 902, a DU transmits, to a first CU, a first interface message, causing the first CU to process the first interface message. In one implementation, the first interface message (*e.g.,* a first *F1 Setup Request* message in events 508, 550, 650, 750, 850) causes the first CU to process the first interface message so that a first connection (*e.g*., F1 connection) can be established between the DU and the first CU. In another implementation, the first interface message is a message (*e.g*., F1AP message) transmitted by the DU over the established first connection. In either of these implementations, the first interface message can include a first ID associated with the first connection. For example, the first ID can identify the DU that initiates establishing the first connection, cell(s) served by the DU, RRC version supported by the DU, TLA used by the DU, and/or a BAP address used by the DU, as described above in Fig. 5A. In some implementations, the first interface message can include a TLA of the first CU. As another example, the first ID can indicate that the recipient for the first interface message transmitted over the established first connection is the first CU.

At block 904, the DU transmits, to the first CU, a second interface message, causing the first CU to determine that the second interface message is for a second CU (and forward the second interface message to the second CU). In one implementation, the second interface message (*e.g.,* a second *F1 Setup Request* message in events 516, 660, 661, 760, 761, 860, 861) causes the first CU to forward the second interface message to the second CU, so that a second connection (*e.g.*, second F1 connection) can be established with the DU and the second CU via the first CU. In another implementation, the second interface message is a message (*e.g*., F1AP message) transmitted by the DU over the established second connection. In either of these implementations, the second interface message can include a second ID associated with the second connection. For example, similar to the first ID, the second ID can identify the DU that initiates establishing the second connection, cell(s) served by the DU, RRC version supported by the DU, TLA used by the DU, and/or a BAP address used by the DU. In some implementations, the first interface message can include a TLA of the second CU. As another example, the second ID can indicate that the recipient for the second interface message transmitted over the established second connection is the second CU.

Referring now to Fig. 10, whereas the DU of method 900 transmits an interface message with a particular ID to instruct the first CU to either process the interface message or forward the interface message to the second CU, the DU of method 1000 transmits an interface message on a particular interface to instruct the first CU to either process the interface message or forward the interface message to the second CU.

In method 1000 of Fig. 10, a DU at block 1002 transmits, to a first CU, a first interface message over a first interface, causing the first CU to process the first interface message. In one implementation, the first interface message can be a first *F1 Setup Request* message transmitted over a first channel for carrying control plane (*e.g.,* F1-C) traffic for establishing a first connection (*e.g*., a first F1 connection) with the DU. In another implementation, the first interface message can be a message (*e.g*., F1AP message) transmitted by the DU over a control plane (*e.g.,* F1-C) portion of the established first connection. In either of these implementations, the first interface message can include a first ID associated with the first connection, described above in Fig. 9.

At block 1004, the DU transmits, to the first CU, a second interface message over a second interface, causing the first CU to determine that the second interface message is for a second CU (and forward the second interface message to the second CU). In one implementation, the second interface message can be a second *F1 Setup Request* message transmitted over a second channel for carrying user plane (*e.g.,* F1-U) traffic for establishing a second connection (*e.g.,* a second F1 connection) with the DU via the first CU. In another implementation, the second interface message can be a message (*e.g., a UE Context Setup Request* message) transmitted by the DU over a user plane (*e.g.,* F1-U) portion of the established second connection. In either of these implementations, the second interface message can include a second ID associated with the second connection, described above in Fig. 9.

Referring now to Fig. 11, whereas the DU of method 900 transmits an interface message with a particular ID to instruct the first CU to either process the interface message or forward the interface message to the second CU, the DU of method 1000 transmits the interface message in a packet to instruct the first CU to either process the interface message or forward the interface message to the second CU.

Similar to method 900, in method 1100 of Fig. 11, a DU at block 1102 transmits, to a first CU, a first interface message in a first packet, causing the first CU to process the first interface message. In some implementations, the first packet can be a first GPRS packet that includes the first ID described above in Fig. 9.

At block 1104, the DU transmits, to the first CU, a second interface message in a second packet, causing the first CU to determine that the second interface message is for a second CU (and forward the second interface message to the second CU). In some implementations, the second packet can be a second GPRS packet that includes a second ID, similar to the first ID, as described above in Fig. 9.

Referring now to Fig. 12, an example method 1200 can be implemented in a first CU for establishing a second connection (*e.g*., second F1 connection) between a DU and a second CU via the first CU. In some implementations, the first CU is a first IAB-donor-CU (*e.g.,* IAB-donor-CU 172A), the DU is an IAB-DU (*e.g.,* DU 174C), and the second CU is a second IAB-donor-CU (*e.g.*, IAB-donor-CU 172B).

At block 1202, a first CU receives an interface message from a DU (*e.g.,* in event 516, 660, 661, 760, 761, 860, 861), causing the first CU to determine that the interface message is for a second CU. In some implementations, the interface message can be a *F1 Setup Request* message. The interface message can indicate or include the address/identity (*e.g.,* IP address, Transport Network Layer address, gNB identity, gNB-CU identity, a TEID, or gNB-CU name) of the second CU, so that upon receiving the interface message, the first CU can determine that the recipient for the interface message is the second CU in accordance with the address/identity. In other implementations, the interface message need not have the address/identity of the second CU. Instead, the first CU can generate a container message including the interface message to indicate that the recipient for the interface message is not the first CU, and if the second CU is the only neighboring CU that the first CU connects to or can connect to, the first CU can determine that the second CU should be the proper recipient for the interface message, and designate the container message accordingly.

At block 1204, in implementations in which a BS to BS interface exists between the first CU and the second CU, the first CU generates a BS to BS interface message including the interface message. In other implementations in which the BS to BS interface does not exist between the first CU and the second CU, the first CU omits generating the BS to BS interface message.

At block 1206, in implementations in which the BS to BS interface exists, the first CU transmits the BS to BS interface message to the second CU (*e.g.,* 518, 660, 760, 860). In implementations in which the BS to BS interface does not exist, the first CU transmits the interface message to the second CU via a CN (*e.g.,* CN 110) (*e.g.,* 517, 661, 761, 861).

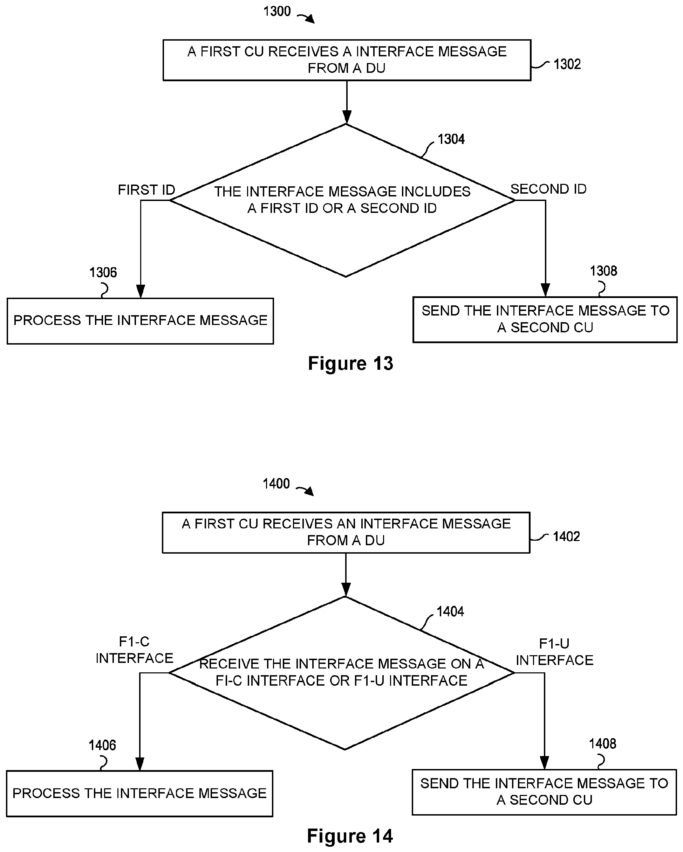

Referring now to Fig. 13, an example method 1300 can be implemented in a first CU for establishing multiple respective connections (*e.g.*, F1 connections) between a DU and the first CU, and between the DU and a second CU. In some implementations, the DU is an IAB-DU (*e.g.,* DU 174C), the first CU is a first IAB-donor-CU (*e.g.,* IAB-donor-CU 172A), and the second CU is a second IAB-donor-CU (*e.g.*, IAB-donor-CU 172B).

At block 1302, similar to block 902, a first CU receives, from a DU, an interface message (*e.g., a F1 Setup Request* message).

At block 1304, the first CU determines whether the interface message includes a first ID or a second ID. Generally, the first CU can determine that the interface message is for the first CU if the interface message includes the first ID, or can determine that the interface message is for a second CU if the interface message includes the second ID.

If the first CU at block 1304, similar to block 902, determines that the interface message includes the first ID, the first CU at block 1306 processes the interface message for establishing a first connection with the DU.

If the first CU at block 1304, similar to block 904, determines that the interface message includes the second ID, the first CU forwards the interface message to the second CU for establishing a second connection with the DU via the first CU. In some implementations, the first CU can forward the interface message to the second CU via a CN (*e.g.,* CN 110), and the second CU can establish the second connection with the DU via the first CU and the CN.

Referring now to Fig. 14, whereas the first CU of method 1300 can determine whether the interface message is for the first CU or the second CU depending on an ID included in the interface message, the first CU of method 1400 can determine whether the interface message is for the first CU or the second CU depending on the interface over which the interface message was received from a DU.

At block 1402, similar to blocks 1002 and 1004, a first CU receives an interface message (*e.g., a F1 Setup Request* message, *UE Context Setup Request* message) from a DU.

At block 1404, the first CU determines whether it received the interface message over an F1-C interface or an F1-U interface.

If the first CU at block 1404, similar to block 1002, determines that it received the interface message (*e.g., a F1 Setup Request* message) over the F1-C interface, the first CU at block 1406 processes the interface message for establishing a first connection with the DU.

If the first CU at block 1404 determines that it received the interface message (e.g., a *UE Context Setup Request* message) over the F1-U interface, the first CU at block 1408 forwards the interface message to the second CU for establishing a second connection with the DU via the first CU. In some implementations, the first CU can forward the interface message to the second CU via a CN (*e.g.,* CN 110), and the second CU can establish the second connection with the DU via the first CU and the CN.

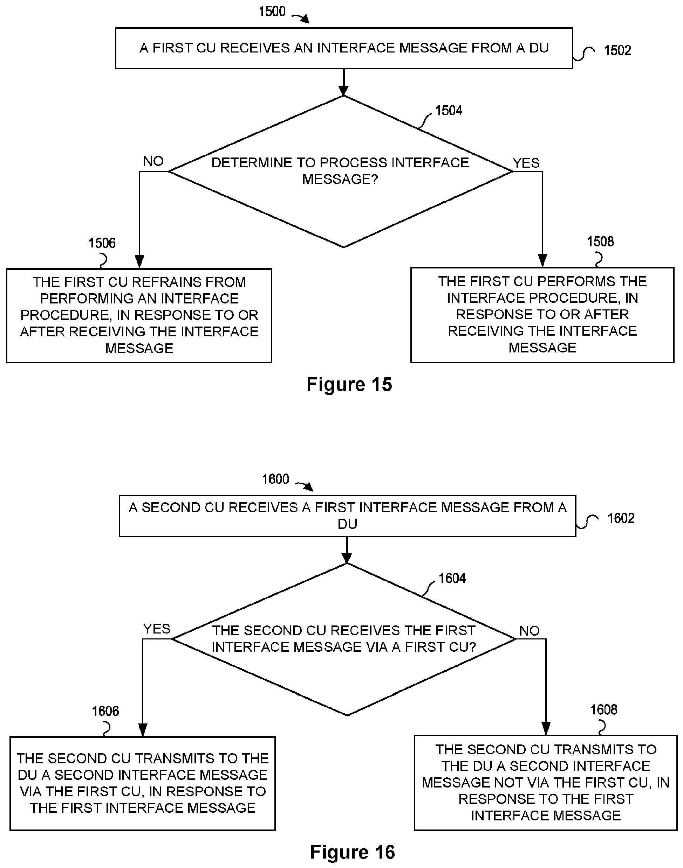

Referring now to Fig. 15, an example method 1500 can be implemented in a first CU (*e.g.,* IAB-donor-CU 172A) for determining whether to process an interface message received from a DU (*e.g.,* DU 174C).

At block 1502, a first CU receives, from a DU, an interface message. In some implementations, the interface message is an *F1 Setup Request* message. In other implementations, the interface message is a DU-initiated message (*e.g.,* UE Context Modification Required message, UE Context Release Request message).

Rather than performing an interface procedure (*e.g.,* F1 setup procedure, DU-initiated UE Context Modification procedure, DU-initiated UE Context Release Request procedure) as a default in response to or after receiving the interface message, the first CU at block 1504 determines whether it should process the interface message.

If the first CU at block 1504 determines that it should not process the interface message, the first CU at block 1506 refrains from performing the interface procedure in response to or after receiving the interface message. Instead, the first CU forwards the interface message to a second CU (*e.g.,* IAB-donor-CU 172B), similar to blocks 1308 and 1408, so that the second CU can perform the interface procedure. Otherwise, if at block 1504 the first CU determines that it should process the interface message, the first CU at block 1508 performs the interface procedure in response to or after receiving the interface message, similar to blocks 1306 and 1406.

Referring now to Fig. 16, an example method 1600 can be implemented in a second CU for transmitting a second interface message (*e.g., a UE Context Response* message) to a DU in response to receiving a first interface message (*e.g., UE Context Request* message) from the DU. In some implementations, the second CU (*e.g.,* IAB-donor-CU 172B) can receive a first interface message from either a first DU (*e.g.,* DU 174C of IAB-node 104) having connections (*e.g.,* respective first and second F1 connections established in events 550, 560, 561, 650, 660, 661, 750, 760, 761, 850, 860, 861) with a first CU (*e.g.,* IAB-donor-CU 172A) and the second CU via the first CU, or a second DU (*e.g.,* of an IAB-node different than the IAB-node 104) having a connection (*e.g.,* F1 connection) with the second CU but not with the first CU. Depending on the manner in which the second CU receives the first interface message, the second CU can appropriately provide a second interface message.

At block 1602, a second CU receives, from a DU, a first interface message.

At block 1604, the second CU determines whether it received the first interface message via a first CU. If at block 1604 the second CU determines that it received the first interface message via the first CU, the second CU is aware that the DU is a first DU having a connection with the first CU. Accordingly, the second CU at block 1606 transmits, to the first DU, a second interface message. Otherwise, if at block 1604 the second CU determines that it received the first interface message directly from the DU (*i.e.,* not via the first CU), the second CU is aware that the DU cannot be the first DU described above, and instead, the DU is a second DU that does not have a connection with the first CU. Accordingly, the second CU at block 1608 transmits, to the second DU, the second interface message.

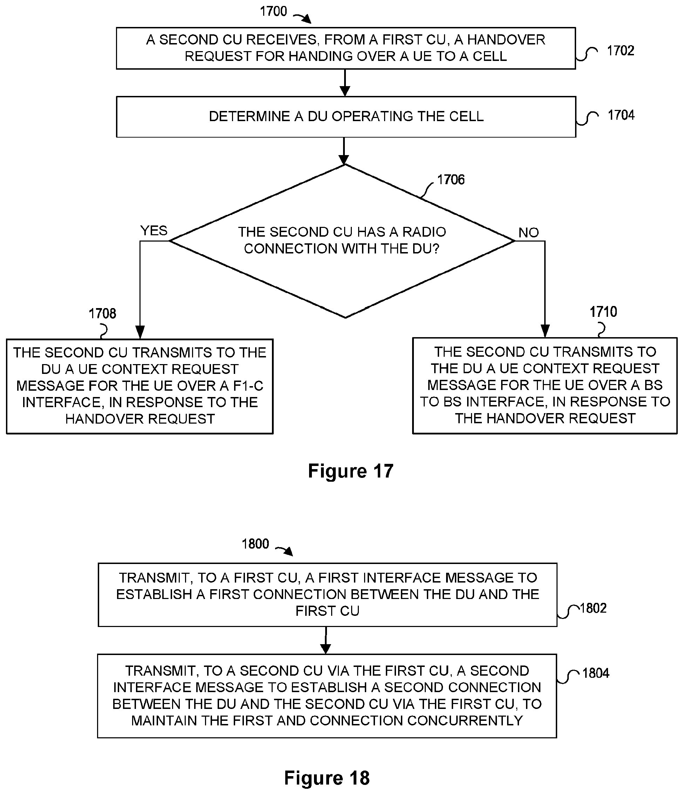

Referring now to Fig. 17, an example method 1700 can be implemented in a second CU for transmitting a second interface message (*e.g., a UE Context Request* message) to a DU in response to receiving a first interface message (*e.g., Handover Request* message) from a first CU. In some implementations, the DU is an IAB-DU (*e.g.,* DU 174C), the first CU is a first IAB-donor-CU (*e.g*., IAB-donor-CU 172A), and the second CU is a second IAB-donor-CU (*e.g.,* IAB-donor-CU 172B). The DU has connections (*e.g.,* respective first and second F1 connections established in events 550, 560, 561, 650, 660, 661, 750, 760, 761, 850, 860, 861) with the first CU (*e.g.*, IAB-donor-CU 172A) and the second CU via the first CU.

At block 1702, a second CU receives, from a first CU, a first interface message for handing over a UE (*e.g.,* UE 102) to a particular cell. In some implementations, the first interface message includes information indicating the particular cell.

At block 1704, the second CU determines a DU that operates that particular cell, and at block 1706, determines whether it has a UE connection with the DU.

If at block 1706 the second CU determines that it has a radio connection with the DU (*e.g.,* the radio connection established in the IAB-MT setup procedure in event 502), the second CU at block 1708 transmits, to the DU, a second interface message for the UE over the radio connection. Otherwise, if at block 1706 the second CU determines that it does not have a radio connection with the DU (*i.e.,* the third F1 connection has not yet been established at event 676), the second CU at block 1710 transmits, to the DU, the second interface message over a BS to BS interface (*e.g.*, Xn interface).

Referring now to Fig. 18, an example method 1800 can be implemented in a DU (*e.g.,* DU 174C) operating in a RAN (*e.g.,* RAN 105) for establishing a connection (*e.g.,* a F1 connection) with a centralized unit (CU) (*e.g.,* CU 172A, CU 172B) operating in the RAN.

At block 1802, a DU transmits, to a first CU (*e.g.,* CU 172A), a first interface message (*e.g.,* a first F1 *Setup Request* message) to establish a first connection between the DU and the first CU (*e.g.,* in event 508, 550, 650, 750, 850). In some implementations, the first interface message includes a first identity associated with the first connection, such as an identity of the DU at which the first connection terminates. In some implementations, the first interface message can be included in a first packet (*e.g.,* first GPRS packet), and the first identity can be included in the first packet. In yet other implementations, the DU transmits the first interface message over a first channel for carrying control plane traffic.

At block 1804, the DU transmits, to a second CU (*e.g.,* CU 172B) via the first CU, a second interface message (*e.g.,* a second F1 *Setup Request* message) to establish a second connection between the DU and the second CU via the first CU, to maintain the first connection and the second connection concurrently (*e.g.*, in event 516, 660, 661, 760, 761, 860, 861). In some implementations, the second interface message includes a second identity associated with the second connection, such as an identity of the DU at which the second connection terminates. In some implementations, the second interface message can be included in a second packet (*e.g.,* second GPRS packet), and the second identity can be included in the second packet. In yet other implementations, the DU transmits the second interface message over a second channel for carrying user plane traffic.

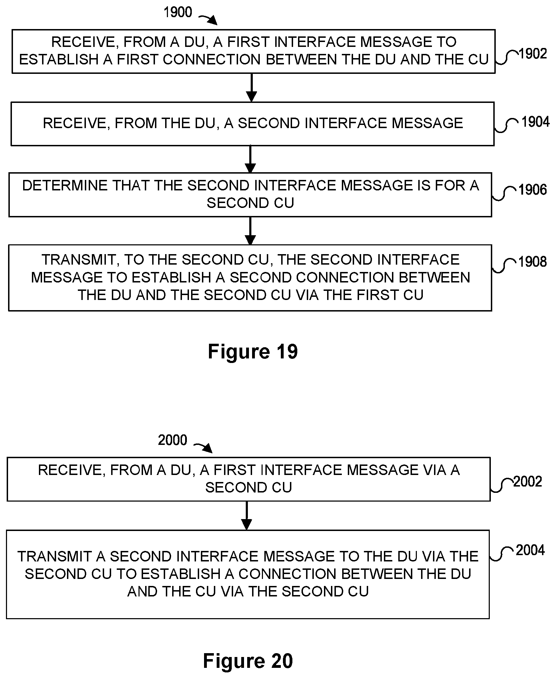

Referring now to Fig. 19, an example method 1900 can be implemented in a CU (*e.g.,* CU 172A) operating in a RAN (*e.g.,* RAN 105) for establishing a connection (*e.g.,* a F1 connection) with a DU (*e.g.,* DU 174C) operating in the RAN.

At block 1902, similar to block 1802, a CU receives, from a DU, a first interface message to establish a first connection between the DU and the CU (*e.g.,* in event 508, 550, 650, 750, 850).

At block 1904, similar to block 1804, the CU receives, from the DU, a second interface message to establish a second connection between the DU and a second CU (*e.g.,* CU 172B) via the CU, to maintain the first connection and the second connection concurrently (*e.g.,* in event 516, 660, 661, 760, 761, 860, 861).

At block 1906, the CU determines that the second interface message is for the second CU. In some implementations, the CU determines that the second interface message is for the second CU by determining that the second interface message includes an identity of the second CU or is otherwise addressed to the second CU. In other implementations, the CU determines that the second interface message omits an identity of the CU, and thus assumes that the second CU is the proper recipient for the second interface message. In yet other implementations, the CU determines that it received the second interface message over a channel for carrying user plane traffic instead of over a channel for carrying control plane traffic, and thus assumes that the second CU is the proper recipient for the second interface message.

At block 1908, the CU transmits, to the second CU, the second interface message to establish the second connection (*e.g.,* in event 517, 518, 660, 661, 760, 761, 860, 861).

Referring now to Fig. 20, an example method 2000 can be implemented in a CU (*e.g.,* CU 172B) operating in a RAN (*e.g.,* RAN 105) for establishing a connection (*e.g.,* a F1 connection) with a DU (*e.g.,* DU 174C) operating in the RAN.

At block 2002, a CU receives, from a DU, an uplink interface message via a second CU (*e.g.,* CU 172A) (*e.g.,* 518, 519, 660, 661, 760, 761, 860, 861). In some implementations, the uplink interface message is an F1 Setup Request message.

At block 2004, the CU transmits a downlink interface message (*e.g.,* F1 Setup Response message) to the DU via the second CU to establish a connection between the DU and the CU via the second CU (*e.g.,* 521, 522, 660, 661, 760, 761, 860, 861). In some implementations, the downlink interface message is an F1 Setup Response message.

The following additional considerations apply to the foregoing discussion.

"TLA" and "TNLA" can be interchangeably used. The "connection", "interface", and "interface connection" can be interchangeably used.

A user device in which the techniques of this disclosure can be implemented (*e.g*., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules can be software modules (*e.g.,* code stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.,* as a special-purpose processor, such as a field programmable gate array (FPGA) or an application-specific integrated circuit (ASIC)) to perform certain operations. A hardware module may also comprise programmable logic or circuitry (*e.g*., as encompassed within a general-purpose processor or other programmable processor) that is temporarily configured by software to perform certain operations. The decision to implement a hardware module in dedicated and permanently configured circuitry, or in temporarily configured circuitry (*e.g.*, configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for managing connections to multiple CUs through the disclosed principles herein. Thus, while particular embodiments and applications have been illustrated and described, it is to be understood that the disclosed embodiments are not limited to the precise construction and components disclosed herein.

## Claims

1. A method in an integrated access and backhaul, IAB, node operating in a radio access network, RAN, the method for establishing concurrent connections with multiple centralized units, CUs, operating in the RAN, and the method comprising:
transmitting (508), by gNB-distributed unit functionality of the IAB node, IAB-DU, and to a first CU included in a first IAB-donor, a first interface message to establish (514) a first connection between the IAB-DU and the first CU;
the method being **characterized by**:
transmitting (516), by the IAB-DU via the first CU and to a second CU included in a second IAB-donor, a second interface message to establish (526) a second connection between the IAB-DU and the second CU via the first CU, to maintain the first connection and the second connection concurrently.

2. The method of claim 1, wherein:
the first interface message includes a first identity associated with the first connection, and
the second interface message includes a second identity associated with the second connection.

3. The method of claim 1 or claim 2, wherein:
transmitting (508) the first interface message includes transmitting the first interface message over a first channel for carrying control plane traffic; and
transmitting (516) the second interface message includes transmitting the second interface message over a second channel for carrying user plane traffic.

4. The method of any one of claims 1-3, wherein:
transmitting (508) the first interface message includes transmitting the first interface message in a first packet; and
transmitting (516) the second interface message includes transmitting the second interface message in a second packet.

5. The method of claim 4, wherein:
the first packet includes a first identity associated with the first connection; and
the second packet includes a second identity associated with the second connection.

6. The method of any one of claims 1-5, further comprising:
performing (670) a handover of the IAB-DU to the second CU;
releasing the first connection and the second connection after the handover; and
transmitting (618) a third interface message to the second CU via a radio interface between the IAB-DU and a network node of the second CU, to establish (622) a third connection with the second CU.

7. The method of any one of claims 1-5, further comprising:
performing (670) a handover of the IAB-DU to the second CU; and
retaining (621, 623) the first connection and the second connection after the handover.

8. The method of any one of claims 1-5, wherein transmitting (516) the second interface message includes transmitting the second interface message to the second CU via the CU and a core network (CN) to establish (526) the second connection between the IAB-DU and the second CU via the CU and the CN.

9. An integrated access and backhaul distributed unit, IAB-DU, including processing hardware and configured to implement the method of any one of the preceding claims.

10. A method in a centralized unit, CU, included in an integrated access and backhaul (IAB)-donor operating in a radio access network, RAN, the method for establishing concurrent connections of gNB-distributed unit functionality of an IAB node, IAB-DU, with multiple CUs operating in the RAN, the method comprising:
receiving (1902), by the CU and from the IAB-DU, a first interface message to establish (514) a first connection between the IAB-DU and the CU;
receiving (1904), by the CU and from the IAB-DU, a second interface message to establish (526) a second connection between the IAB-DU and a second CU via the CU, to maintain the first connection and the second connection concurrently, the second CU included in a second IAB-donor operating in the RAN;
determining (1906), by the CU, that the second interface message is for the second CU; and
transmitting (1908), by the CU and to the second CU, the second interface message to establish the second connection.

11. The method of claim 10, wherein determining (1906) that the second interface message is for the second CU includes one of:
determining (1304) that the second interface message includes an identity of the second CU;
determining (1906) that the second interface message is addressed to the second CU;
determining that the second interface message omits an identity of the CU; or
determining(1404) that the second interface message is received over a channel for carrying user plane traffic.

12. The method of any one of claims 10-11, wherein transmitting (516) the second interface message includes transmitting (517,519) the second interface message to the second CU via the CU and a core network (CN) to establish (526) the second connection between the IAB-DU and the second CU via the CU and the CN.

13. The method of any one of the preceding claims, wherein:
the first interface message is a first F1 Setup Request message, a first UE Context Modification Required message, or a first UE Context Release Request message; and
the second interface message is a second F1 Setup Request message, a UE Context Setup Request message, a second UE Context Modification Required message, or a second UE Context Release Request message.

14. The method of any one of the preceding claims, wherein:
the first connection is a first F1 connection; and
the second connection is a second F1 connection.

15. A method in a centralized unit, CU, included in an integrated access and backhaul donor, IAB-donor, operating in a radio access network, RAN, the method for establishing a connection with gNB-distributed unit functionality included in an IAB node, IAB-DU, the IAB node operating in the RAN, and the method comprising:
receiving (2002), by the CU and from the IAB-DU, an uplink interface message via a second CU, the second CU included in a second IAB-donor operating in the RAN; and transmitting (2004), by the CU, a downlink interface message to the IAB-DU via the second CU to establish a connection between the IAB-DU and the CU;
the method being **characterized by**:
receiving (806), by the CU and from the second CU, a handover request for handing over a user equipment (UE) to a cell operated by the IAB-DU; and
transmitting (808, 810), by the CU and to the IAB-DU, a request for a context of the UE over the second connection.

16. A centralized unit, CU, including processing hardware and configured to implement a method of any one of claims 10-15.

## Patentansprüche

1. Verfahren in einem integrierten Zugangs- und Backhaul-Knoten (integrated access and backhaul, IAB Knoten), der in einem Funkzugangsnetz (radio access network, RAN) betrieben wird, wobei das Verfahren zum Herstellen gleichzeitiger Verbindungen mit mehreren zentralisierten Einheiten (centralized units, CUs) dient, die in dem RAN betrieben werden, und das Verfahren Folgendes umfasst:
Übertragen (508) einer ersten Schnittstellennachricht durch die gNB-verteilte Einheitenfunktionalität des IAB Knotens, IAB-DU,
an eine erste CU, die in einem ersten IAB-Spender beinhaltet ist, um eine erste Verbindung zwischen der IAB-DU und der ersten CU herzustellen (514); wobei das Verfahren durch Folgendes gekennzeichnet ist:
Übertragen (516) einer zweiten Schnittstellennachricht durch die IAB-DU über die erste CU und an eine zweite CU, die in einem zweiten IAB-Spender beinhaltet ist, um eine zweite Verbindung zwischen der IAB-DU und der zweiten CU über die erste CU herzustellen (526), um die erste Verbindung und die zweite Verbindung gleichzeitig aufrechtzuerhalten.

2. Verfahren nach Anspruch 1, wobei:
die erste Schnittstellennachricht eine erste Identität beinhaltet, die der ersten Verbindung zugeordnet ist, und
die zweite Schnittstellennachricht eine zweite Identität beinhaltet, die der zweiten Verbindung zugeordnet ist.

3. Verfahren nach Anspruch 1 oder Anspruch 2, wobei:
das Übertragen (508) der ersten Schnittstellennachricht das Übertragen der ersten Schnittstellennachricht über einen ersten Kanal zum Tragen von Datenverkehr auf Steuerungsebene beinhaltet; und
das Übertragen (516) der zweiten Schnittstellennachricht das Übertragen der zweiten Schnittstellennachricht über einen zweiten Kanal zum Tragen von Datenverkehr auf Benutzerebene beinhaltet.

4. Verfahren nach einem der Ansprüche 1-3, wobei:
das Übertragen (508) der ersten Schnittstellennachricht das Übertragen der ersten Schnittstellennachricht in einem ersten Paket beinhaltet; und
das Übertragen (516) der zweiten Schnittstellennachricht das Übertragen der zweiten Schnittstellennachricht in einem zweiten Paket beinhaltet.

5. Verfahren nach Anspruch 4, wobei:
das erste Paket eine erste Identität beinhaltet, die der ersten Verbindung zugeordnet ist, und
das zweite Paket eine zweite Identität beinhaltet, die der zweiten Verbindung zugeordnet ist.

6. Verfahren nach einem der Ansprüche 1-5, ferner umfassend:
Durchführen (670) einer Übergabe der IAB-DU an die zweite CU;
Freigeben der ersten Verbindung und der zweiten Verbindung nach der Übergabe; und
Übertragen (618) einer dritten Schnittstellennachricht an die zweite CU über eine Funkschnittstelle zwischen der IAB-DU und
einem Netzknoten der zweiten CU, um eine dritte Verbindung mit der zweiten CU herzustellen (622).

7. Verfahren nach einem der Ansprüche 1-5, ferner umfassend:
Durchführen (670) einer Übergabe der IAB-DU an die zweite CU;
und
Beibehalten (621, 623) der ersten Verbindung und der zweiten Verbindung nach der Übergabe.

8. Verfahren nach einem der Ansprüche 1-5, wobei das Übertragen (516) der zweiten Schnittstellennachricht das Übertragen der zweiten Schnittstellennachricht an die zweite CU über die CU und ein Kernnetz (CN) beinhaltet, um die zweite Verbindung zwischen der IAB-DU und der zweiten CU über die CU und das CN aufzubauen (526).

9. Integrierte verteilte Zugangs- und Backhaul-Einheit, IAB-DU, die Verarbeitungshardware beinhaltet und dazu konfiguriert ist, das Verfahren nach einem der vorhergehenden Ansprüche zu implementieren.

10. Verfahren in einer zentralisierten Einheit, CU, die in einem integrierten Zugangs- und Backhaul (IAB)-Spender beinhaltet ist, der in einem Funkzugangsnetz, RAN, betrieben wird, wobei das Verfahren zum Herstellen gleichzeitiger Verbindungen der gNB-verteilten Einheitsfunktionalität eines IAB Knotens, IAB-DU, mit mehreren CUs, die in dem RAN betrieben werden, dient, wobei das Verfahren Folgendes umfasst:
Empfangen (1902) einer ersten Schnittstellennachricht durch die CU und von der IAB-DU, um eine erste Verbindung zwischen der IAB-DU und der CU herzustellen (514);
Empfangen (1904) einer zweiten Schnittstellennachricht durch die CU und von der IAB-DU, um eine zweite Verbindung zwischen der IAB-DU und einer zweiten CU über die CU herzustellen (526), um die erste Verbindung und die zweite Verbindung gleichzeitig aufrechtzuerhalten, wobei die zweite CU in einem zweiten IAB-Spender beinhaltet ist, der in dem RAN arbeitet;
Bestimmen (1906) durch die CU, dass die zweite Schnittstellennachricht für die zweite CU bestimmt ist; und
Übertragen (1908) der zweiten Schnittstellennachricht durch die CU und an die zweite CU, um die zweite Verbindung herzustellen.

11. Verfahren nach Anspruch 10, wobei das Bestimmen (1906), dass die zweite Schnittstellennachricht für die zweite CU ist, eines von Folgendem beinhaltet:
Bestimmen (1304), dass die zweite Schnittstellennachricht eine Identität der zweiten CU beinhaltet;
Bestimmen (1906), dass die zweite Schnittstellennachricht an die zweite CU adressiert ist;
Bestimmen, dass die zweite Schnittstellennachricht eine Identität der CU auslässt; oder
Bestimmen (1404), dass die zweite Schnittstellennachricht über einen Kanal empfangen wird, der Datenverkehr auf Benutzerebene trägt.

12. Verfahren nach einem der Ansprüche 10-11, wobei das Übertragen (516) der zweiten Schnittstellennachricht das Übertragen (517,519) der zweiten Schnittstellennachricht an die zweite CU über die CU und ein Kernnetz (CN) beinhaltet, um die zweite Verbindung zwischen der IAB-DU und der zweiten CU über die CU und das CN aufzubauen (526).

13. Verfahren nach einem der vorhergehenden Ansprüche, wobei:
die erste Schnittstellennachricht eine erste F1-Einrichtungsanforderungsnachricht, eine erste UE-Kontext-Änderungsanforderungsnachricht oder eine erste UE-Kontext-Freigabeanforderungsnachricht ist; und
die zweite Schnittstellennachricht eine zweite F1-Einrichtungsanforderungsnachricht, eine UE-Kontext-Einrichtungsanforderungsnachricht, eine zweite UE-Kontext-Änderungsanforderungsnachricht oder eine zweite UE-Kontext-Freigabeanforderungsnachricht ist.

14. Verfahren nach einem der vorhergehenden Ansprüche, wobei:
die erste Verbindung eine erste F1-Verbindung ist; und
die zweite Verbindung eine zweite F1-Verbindung ist.

15. Verfahren in einer zentralisierten Einheit, CU, die in einem integrierten Zugangs- und Backhaulspender, IAB-Spender, beinhaltet ist, der in einem Funkzugangsnetz, RAN, betrieben wird, wobei das Verfahren zum Herstellen einer Verbindung mit einer gNB-verteilten Einheitsfunktionalität beinhaltet, die in einem IAB Knoten, IAB-DU, enthalten ist, wobei der IAB Knoten in dem RAN betrieben wird, und das Verfahren Folgendes umfasst:
Empfangen (2002) einer Uplink-Schnittstellennachricht durch die CU und von der IAB-DU über eine zweite CU, wobei die zweite CU einen zweiten im RAN operierenden IAB-Spender beinhaltet; und
Übertragen (2004) einer Downlink-Schnittstellennachricht durch die CU an die IAB-DU über die zweite CU, um eine Verbindung zwischen der IAB-DU und der CU herzustellen; wobei das Verfahren durch Folgendes gekennzeichnet ist:
Empfangen (806), durch die CU und von der zweiten CU, einer Übergabeanforderung für die Übergabe eines Benutzergeräts (UE user equipment) an eine von der IAB-DU betriebene Zelle; und
Übertragen (808, 810) einer Anfrage für einen Kontext des UE über die zweite Verbindung durch die CU und an die IAB-DU.

16. Zentralisierte Einheit CU, die Verarbeitungshardware beinhaltet und dazu konfiguriert ist, ein Verfahren nach einem der Ansprüche 10-15 zu implementieren.

## Revendications

1. Procédé dans un nœud d'accès et de liaison terrestre intégrée, IAB, fonctionnant dans un réseau d'accès radio, RAN, le procédé d'établissement des connexions simultanées avec de multiples unités centralisées, CU, fonctionnant dans le RAN, et le procédé comprenant :
la transmission (508), par la fonctionnalité d'unité distribuée gNB du nœud IAB, IAB-DU, et à une première CU incluse dans un premier donneur IAB, d'un premier message d'interface pour établir (514) une première connexion entre l'IAB-DU et la première CU ; le procédé étant **caractérisé par** :
la transmission (516), par l'IAB-DU via la première CU et à une seconde CU incluse dans un second donneur IAB, d'un deuxième message d'interface pour établir (526) une deuxième connexion entre l'IAB-DU et la seconde CU via la première CU, pour maintenir simultanément la première connexion et la deuxième connexion.

2. Procédé selon la revendication 1, dans lequel :
le premier message d'interface comporte une première identité associée à la première connexion, et
le deuxième message d'interface comporte une seconde identité associée à la deuxième connexion.

3. Procédé selon la revendication 1 ou la revendication 2, dans lequel :
la transmission (508) du premier message d'interface comporte la transmission du premier message d'interface sur un premier canal pour le transport du trafic de plan de commande ; et
la transmission (516) du deuxième message d'interface comporte la transmission du deuxième message d'interface sur un second canal pour le transport du trafic de plan utilisateur.

4. Procédé selon l'une quelconque des revendications 1 à 3, dans lequel :
la transmission (508) du premier message d'interface comporte la transmission du premier message d'interface dans un premier paquet ; et
la transmission (516) du deuxième message d'interface comporte la transmission du deuxième message d'interface dans un second paquet.

5. Procédé selon la revendication 4, dans lequel :
le premier paquet comporte une première identité associée à la première connexion ; et
le second paquet comporte une seconde identité associée à la deuxième connexion.

6. Procédé selon l'une quelconque des revendications 1 à 5, comprenant également :
la réalisation (670) d'un transfert de l'IAB-DU à la seconde CU ;
la libération de la première connexion et de la deuxième connexion après le transfert ; et
la transmission (618) d'un troisième message d'interface à la seconde CU via une interface radio entre l'IAB-DU et un nœud de réseau de la seconde CU, pour établir (622) une troisième connexion avec la seconde CU.

7. Procédé selon l'une quelconque des revendications 1 à 5, comprenant également :
la réalisation (670) d'un transfert de l'IAB-DU à la seconde CU ; et
la retenue (621, 623) de la première connexion et de la deuxième connexion après le transfert.

8. Procédé selon l'une quelconque des revendications 1 à 5, dans lequel la transmission (516) du deuxième message d'interface comporte la transmission du deuxième message d'interface à la seconde CU via la CU et un réseau central, CN, pour établir (526) la deuxième connexion entre l'IAB-DU et la seconde CU via la CU et le CN.

9. Unité distribuée d'accès et de liaison terrestre intégrée, IAB-DU, comportant du matériel de traitement et configurée pour mettre en œuvre le procédé selon l'une quelconque des revendications précédentes.

10. Procédé dans une unité centralisée, CU, incluse dans un donneur d'accès et de liaison terrestre intégrée, IAB, fonctionnant dans un réseau d'accès radio, RAN, le procédé d'établissement des connexions simultanées d'une fonctionnalité d'unité distribuée gNB d'un nœud IAB, IAB-DU, avec de multiples CU fonctionnant dans le RAN, et le procédé comprenant :
la réception (1902), par la CU et à partir de l'IAB-DU, d'un premier message d'interface pour établir (514) une première connexion entre l'IAB-DU et la CU ;
la réception (1904), par la CU et à partir de l'IAB-DU, d'un deuxième message d'interface pour établir (526) une deuxième connexion entre l'IAB-DU et une seconde CU via la CU, pour maintenir simultanément la première connexion et la deuxième connexion, la seconde CU étant incluse dans un second donneur IAB fonctionnant dans le RAN ;
la détermination (1906), par la CU, que le deuxième message d'interface est destiné à la seconde CU ; et
la transmission (1908), par la CU et à la seconde CU, du deuxième message d'interface pour établir la deuxième connexion.

11. Procédé selon la revendication 10, dans lequel la détermination (1906) que le deuxième message d'interface est destiné à la seconde CU comporte l'une de :
la détermination (1304) que le deuxième message d'interface comporte une identité de la seconde CU ;
la détermination (1906) que le deuxième message d'interface est adressé à la seconde CU ;
la détermination que le deuxième message d'interface omet une identité de la CU ; ou
la détermination (1404) que le deuxième message d'interface est reçu sur un canal pour le transport du trafic de plan utilisateur.

12. Procédé selon l'une quelconque des revendications 10 et 11, dans lequel la transmission (516) du deuxième message d'interface comporte la transmission (517, 519) du deuxième message d'interface à la seconde CU via la CU et un réseau central, CN, pour établir (526) la deuxième connexion entre l'IAB-DU et la seconde CU via la CU et le CN.

13. Procédé selon l'une quelconque des revendications précédentes, dans lequel :
le premier message d'interface est un premier message de demande de configuration F1, un premier message de modification de contexte UE requise, ou un premier message de demande de libération de contexte UE ; et
le deuxième message d'interface est un second message de demande de configuration F1, un message de demande de configuration de contexte UE, un second message de modification de contexte UE requise, ou un second message de demande de libération de contexte UE.

14. Procédé selon l'une quelconque des revendications précédentes, dans lequel :
la première connexion est une première connexion F1 ; et
la deuxième connexion est une deuxième connexion F1.

15. Procédé dans une unité centralisée, CU, incluse dans un donneur d'accès et de liaison terrestre intégrée, donneur IAB, fonctionnant dans un réseau d'accès radio, RAN, le procédé d'établissement d'une connexion avec une fonctionnalité d'unité distribuée gNB comprise dans un nœud IAB, IAB-DU, le nœud IAB fonctionnant dans le RAN, et le procédé comprenant :
la réception (2002), par la CU et à partir l'IAB-DU, d'un message d'interface de liaison montante via une seconde CU, la seconde CU étant incluse dans un second donneur IAB fonctionnant dans le RAN ; et
la transmission (2004), par la CU, d'un message d'interface de liaison descendante à l'IAB-DU via la seconde CU pour établir une connexion entre l'IAB-DU et la CU ; le procédé étant **caractérisé par** :
la réception (806), par la CU et à partir de la seconde CU, d'une demande de transfert pour transférer un équipement utilisateur, UE, à une cellule exploitée par l'IAB-DU ; et
la transmission (808, 810), par le CU et à l'IAB-DU, d'une demande de contexte de l'UE sur la deuxième connexion.

16. Unité centralisée, CU, comportant du matériel de traitement et configurée pour mettre en œuvre un procédé selon l'une quelconque des revendications 10 à 15.
